## Europäisches Patentamt
## European Patent Office
## Office européen des brevets

(19)

(11) Numéro de publication: **0 113 269**
**B1**

(12)

# FASCICULE DE BREVET EUROPEEN

(45) Date de publication du fascicule du brevet:
**26.07.89**

(51) Int. Cl.⁴: **G 06 F 15/20, H 04 N 5/14,**
**H 04 N 5/21**

(21) Numéro de dépôt: **83402357.4**

(22) Date de dépôt: **06.12.83**

(54) **Procédé de discrimination du bruit et du mouvement dans une séquence d'images vidéo, et dispositif détecteur de mouvement pour la mise en oeuvre de ce procédé.**

(30) Priorité: **07.12.82 FR 8220493**

(43) Date de publication de la demande:
**11.07.84 Bulletin 84/28**

(45) Mention de la délivrance du brevet:
**26.07.89 Bulletin 89/30**

(84) Etats contractants désignés:
**DE GB IT NL**

(56) Documents cités:
**FR-A- 2 387 557**
**GB-A- 2 031 688**

(73) Titulaire: **THOMSON-CSF, 51, Esplanade du Général de Gaulle, F-92800 Puteaux (FR)**

(72) Inventeur: **Richard, Christian, THOMSON-CSF SCPI 173, bld Haussmann, F-75379 Paris Cedex 08 (FR)**
Inventeur: **Sadet, Philippe, THOMSON-CSF SCPI 173, bld Haussmann, F-75379 Paris Cedex 08 (FR)**

(74) Mandataire: **Turlèque, Clotilde et al, THOMSON-CSF SCPI, F-92045 PARIS LA DEFENSE CEDEX 67 (FR)**

ACTORUM AG

## Description

Un point d'une image vidéo est dit en mouvement lorsque sa luminance a varié par rapport à celle du point homologue dans l'image immédiatement précédente, à cause d'un mouvement de l'objet représenté par l'image, ou à cause d'une variation de l'éclairage de cet objet, ou à cause du bruit affectant le signal vidéo. Le procédé selon l'invention a pour objet de discriminer les points dont le mouvement est vrai et les points dont le mouvement est dû au bruit. Le dispositif selon l'invention a pour objet de fournir pour chaque point des signaux indiquant son état, ces signaux pouvant être exploités pour réaliser un traitement de l'image tel qu'une élimination du bruit.

Un procédé connu de détection du bruit dans une image consiste:

— à détecter tous les points d'une image, dits en mouvement, dont la luminance a varié par rapport aux points homologues de l'image précédente;

— à dénombrer autour de chaque point en mouvement les points en mouvement situés dans une fenêtre de surface fixe centrée sur le point en mouvement considéré;

— à décider qu'un point en mouvement a un mouvement vrai lorsque le nombre de points en mouvement situés dans la fenêtre est supérieur à une valeur fixée.

La demande de brevet français FR-A-2 387 557 décrit un dispositif de réduction de la visibilité du bruit sur des images de télévision, comportant des filtres temporels qui sont commutés par un détecteur de mouvement. Ce dernier évalue le mouvement dans une fenêtre de $3 \times 3$ points, centrée sur le point courant, en comptant le nombre de points où la variation de luminance, par rapport à l'image précédente, est supérieure à une valeur de seuil.

Ce type de procédé a deux inconvénients. Un premier inconvénient est son manque de souplesse car la surface de la fenêtre ne peut pas être facilement modifiée selon que l'image est plus ou moins affectée par du bruit. Un deuxième inconvénient est une détection erronée en bordure des zones de points en mouvement vrai: ce procédé ne prenant en compte que le nombre de points situés dans la fenêtre il néglige la présence éventuelle d'un grand nombre d'autres points en mouvement vrai situés dans le voisinage immédiat.

Selon l'invention, un procédé de discrimination du bruit et du mouvement dans une séquence d'images vidéo est caractérisé en ce qu'il consiste: à détecter les points d'une image, dits points en mouvement, dont la luminance a varié par rapport à l'image immédiatement précédente à cause d'un mouvement vrai ou à cause du bruit; et en ce qu'il consiste pour chaque point en mouvement:

— à déterminer un minorant $N_z$ du nombre de points d'une zone, constituée de points en mouvement connexes, où est situé le point considéré;

— à faire une première estimation de l'état du point considéré en comparant la valeur $N_z$ par rapport à une valeur $N_{S2}$ fixée ($N_{S2}$ entier positif), l'état du point étant estimé être un mouvement vrai (M), si $N_z > N_{S2}$ et un mouvement dû au bruit (B) si $N_z \leqslant N_{S2}$;

— à faire, pour $j = 2$ à $p-1$, j et p étant des nombres entiers, et p étant un nombre inférieur ou égal à $N_{S2}$, une $j^{\text{ième}}$ estimation de l'état du point considéré en fonction de l'état, estimé précédemment, des points en mouvement connexes au point considéré et appartenant à la même ligne ou à la suivante;

— à faire une $p^{\text{ième}}$ estimation de l'état du point considéré en fonction de l'état estimé précédemment de N' points suivant immédiatement le point considéré sur la même ligne, N' étant un nombre entier fixé tel que $N' \geqslant N_{S2} - p$; l'état du point considéré étant estimé être un mouvement vrai s'il a précédememnt été estimé mouvement vrai (M) ou s'il y a parmi ces N' points au moins un point en mouvement connexe au point considéré, et s'il y a parmi ces points en mouvement connexes au point considéré au moins un point en mouvement vrai (M); et le point considéré étant estimé être en mouvement dû au bruit (B) dans les autres cas;

— et à discriminer les points du premier type (M) et les points du second type (B) selon le résultat de la dernière estimation réalisée.

L'invention sera mieux comprise et d'autres détails apparaîtront à l'aide de la description ci-dessous et des figures l'illustrant.

— Les figures 1 à 10 illustrent l'application d'une première variante du procédé selon l'invention à un exemple d'image.

— Les figure 11 à 17 illustrent l'application d'une seconde variante du procédé selon l'invention à ce même exemple d'image.

— La figure 18 représente le schéma synoptique d'un exemple de réalisation du dispositif selon l'invention.

— La figure 19 représente un schéma synoptique plus détaillé d'une partie de cet exemple de réalisation.

Dans un exemple de réalisation du procédé selon l'invention l'estimation de l'état de chaque point d'une image est réalisée en cinq étapes, chaque étape consistant en une estimation plus certaine que l'estimation réalisée au cours de l'étape précédente. Le déroulement de la première estimation est le suivant:

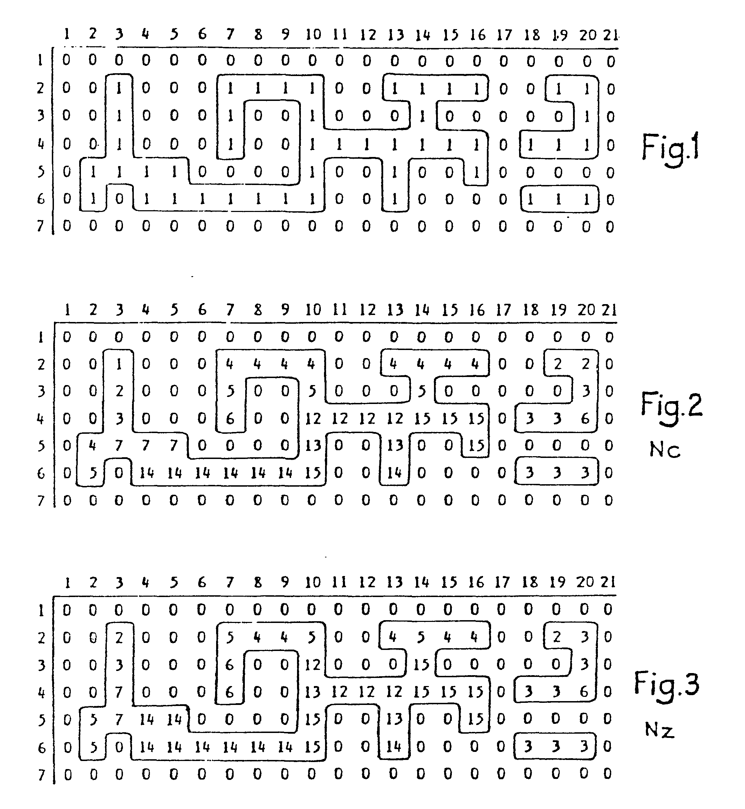

Chaque point d'une image est représenté par la valeur de sa luminance. Cette valeur de luminance est comparée par rapport à celle du point homologue dans l'image précédente. Si elles sont différentes le point est dit en mouvement, si elles sont identiques à une tolérance près le point est dit fixe. La tolérance permet d'éliminer l'effet du bruit lorsque celui-ci a une faible amplitude. La figure 1 représente un exemple d'image où chaque point est représenté par une valeur binaire, égale à 1 lorsque la luminance du point a varié par rapport au point homologue dans l'image précédente et égale à 0 dans le cas contraire c'est-à-dire lorsque le point est fixe. En général les points en mouvement ne sont pas isolés mais connexes, et constituent des zones compactes. Les points dont le mouvement est dû au bruit sont groupés en zones comportant un petit nombre de points, alors que les points dont le mouvement est vrai sont groupés en zones dont le nombre de points est très supérieur. Une estimation de l'état d'un point en mouvement peut donc être réalisée en déterminant le nombre de points de la zone à laquelle il appartient, et en le comparant par rapport à une valeur seuil $N_{S2}$. Dans cet exemple $N_{S2} = 6$, mais ce nombre peut être choisi différemment en fonction du type d'images et en fonction de la quantité de bruit affectant ces images. La détermination du nombre exact de points contenus dans chacune des zones de points en mouvement d'une image est relativement complexe et n'est pas indispensable dans l'application considérée. Il suffit de déterminer pour chacune des zones si son nombre de points est supérieur à la valeur $N_{S2}$. Dans le cas le plus défavorable une zone contient $N_{S2} + 1$ points situés sur une ligne perpendiculaire aux lignes de balayage de l'image. Pour détecter une telle zone il suffit donc de prendre en compte au moins un nombre $N_{S2} + 1$ de lignes, ce nombre est très inférieur au nombre total de lignes d'une image. L'expérience montre que les zones de points en mouvement dû au bruit ont une forme allongée parallèle aux lignes et ne s'étendent pratiquement jamais sur plus de quatre lignes. C'est pourquoi dans cet exemple de réalisation du procédé selon l'invention l'estimation de l'état d'un point est réalisée en ne considérant que l'état des points voisins situés à une distance inférieure ou égale à quatre lignes d'image. Le nombre de lignes prises en compte est lié au nombre des estimations réalisées, comme il apparaîtra dans la suite. Les points sont traités successivement dans l'ordre où ils ont été analysés. Les cinq estimations sont réalisées successivement pour chaque point en mouvement avec un intervalle de temps entre deux estimations inférieur ou égal à la durée d'analyse d'une ligne plus un point d'image. La première estimation consiste d'abord à déterminer pour le point considéré la valeur $N_z$ d'un minorant du nombre de points de la zone de points en mouvement à laquelle appartient le point considéré. Cette valeur $N_z$ est déterminée en deux étapes:

Un premier calcul détermine une valeur $N_c$ d'un premier minorant du nombre des points en mouvement connexes au point courant sur la même ligne ou les lignes précédentes, et cinq cas sont à distinguer:

1<sup>er</sup> cas: le point considéré est le premier point d'un ensemble de points en mouvement connexes sur une même ligne, et le point homologue sur la ligne précédente n'est pas en mouvement. Le minorant $N_c$ est alors pris égal à un nombre C minorant du nombre de points connexes au point considéré et le suivant sur la même ligne. Le nombre C est égal au nombre des points appartenant à l'ensemble de points connexes suivant le point considéré sur la même ligne, avec une limitation à la valeur 8, car c'est suffisant pour détecter les zones ayant plus de 6 points. Dans l'exemple de la figure 1 à la deuxième ligne, septième colonne:

$$0 \qquad\qquad N_c = C = 4$$
$$0\ \boxed{1}\ 1\ 1\ 1\ 0\ 0\ 1$$

Le point considéré est encadré.

2<sup>ème</sup> cas: le point considéré est un point d'un ensemble de points en mouvement connexes sur une même ligne, sans être son premier point, et le point homologue sur la ligne précédente n'est pas en mouvement. Le minorant $N_c$ est alors égal au minorant $N_p$ calculé pour le point immédiatement précédent. Dans l'exemple de la figure 1 à la deuxième ligne, huitième colonne:

$$0 \qquad\qquad N_c = N_p = 4$$
$$0\ 1\ \boxed{1}\ 1\ 1\ 0\ 0\ 1$$

3<sup>ème</sup> cas: le point considéré est le premier point d'un ensemble de points en mouvement connexes sur une même ligne, et le point homologue sur la ligne précédente est en mouvement, le nombre de points de la zone du point homologue ayant pour minorant une valeur $N_a$. Le minorant $N_c$ est alors égal à la somme du nombre C des points appartenant à l'ensemble de points connexes, avec une limitation à 8, et du minorant $N_a$. Dans l'exemple de la figure 1 ce cas est rencontré à la troisième ligne, puis à la quatrième ligne, à la dixième colonne:

$$1\ 1\ 1\ 1 \qquad\qquad N_c = N_a + C = 4 + 1 = 5$$
$$\phantom{1}0\ \boxed{1}\ 0$$

$$1\ 1\ 1\ 1$$
$$\phantom{1}0\ 1\ 0 \qquad\qquad N_c = N_a + C = 5 + 8 = 13$$
$$\phantom{1}0\ \boxed{1}\ 1\ 1\ 1\ 1\ 1\ 1$$

4<sup>ème</sup> cas: le point considéré appartient à un ensemble de points en mouvement connexes sur une même ligne, sans être le premier point de cet ensemble, le point homologue sur la ligne précédente est en mouvement, le nombre de points de la zone du point homologue ayant pour minorant $N_a$, et le point précédent ce point homologue n'est pas en mouvement. Le minorant $N_c$ est alors égal à la somme du minorant $N_p$, calculé pour le point immédiatement précédent, et du minorant $N_a$. En pratique la valeur $N_c$ est limitée à 15. Dans l'exemple de la figure 1 ce cas est rencontré sur la quatrième ligne à la quatorzième colonne:

$$1\ 1\ 1\ 1 \quad\ 1\ 1\ 1\ 1 \qquad N_a + N_p = 5 + 12 = 17$$
$$1\quad 1\quad\ 0\ 1 \qquad\qquad \text{mais } N_c \text{ est limité à 15.}$$
$$1\quad\ 1\ 1\ 1\ \boxed{1}\ 1\ 1$$

5<sup>ème</sup> cas: le point considéré appartient à un ensemble de points en mouvement connexes sur une même ligne, sans être le premier point de cet ensemble, le point homologue sur la ligne précédente est en mouvement, et le point qui précède ce point homologue est lui aussi en mouvement. Le minorant $N_c$ est alors simplement égal au minorant $N_p$ calculé pour le point précédant le point considéré, le calcul effectué antérieurement pour ce minorant ayant tenu compte des points en mouvement situés sur les lignes précédentes. Ce cas est rencontré à la sixième ligne, cinquième colonne, de l'exemple de la figure 1.

```
1                    N_c = N_p = 14
1
1
1 1 1 1
1 0 1 [1] 1 1 1 1 1
```

Dans une deuxième étape, la détermination d'un minorant $N_z$ prend en compte l'état du point homologue du point considéré sur la ligne suivante:

– si ce point homologue n'est pas en mouvement $N_z = N_c$

– si ce point homologue est en mouvement et si $N_b$ est la valeur trouvée pour ce point homologue dans la première étape de la détermination d'un minorant du nombre de points de sa zone, alors $N_z = N_b$.

Cette deuxième étape de la détermination d'un minorant permet de prendre en compte les points en mouvement connexes au point considéré sur la ligne suivante, et les points connexes à ceux-ci.

La figure 2 représente les valeurs des minorants $N_c$ calculées pour les points de l'exemple d'image de la figure 1. Dans cet exemple l'analyse et le traitement des points sont réalisés selon un balayage allant de haut en bas et de gauche à droite. Lors de la mise en œuvre du procédé la limitation de $N_c$, $N_b$ et $N_z$, à 15 permet de limiter la taille des mémoires utilisées sans gêner l'estimation de l'état des points puisqu'une zone ayant au moins 15 points est une zone où le mouvement est vrai. La détermination des minorants $N_z$ nécessite de stocker les valeurs des minorants $N_c$ pendant une durée correspondant à la durée d'une ligne. Ce stockage peut être réalisé par une mémoire dont la capacité correspond à une ligne et comportant quatre bits pour chaque point d'image.

Immédiatement après la détermination de la valeur $N_z$ d'un minorant du nombre de points de la zone à laquelle appartient le point considéré, une première estimation de l'état de ce point est réalisée en comparant la valeur $N_z$ du minorant par rapport à la valeur fixée $N_{S2}$ qui est égale à 6 dans cet exemple. Si $N_z$ est supérieure ou égale à $N_{S2}$ l'état du point considéré est estimé être un mouvement vrai, et si $N_z$ est inférieure à $N_{S2}$ l'état est estimé être un mouvement dû au bruit.

La figure 3 représente les valeurs des minorants $N_z$ pour les points de l'exemple d'image de la figure 1. Il apparaît que pour certains points le remplacement de la valeur $N_c$ par la valeur $N_b$ permet d'obtenir une valeur $N_z$ supérieure à 6 et permet donc de conclure qu'ils sont en mouvement vrai. Par exemple, pour le point situé sur la troisième ligne, dixième colonne, $N_z = N_b = 12$ est supérieur à $N_{S2} = 6$ donc l'état est estimé être un mouvement vrai pour ce point. Par contre pour le point situé sur la deuxième ligne, dixième colonne $N_z = N_b = 5$ est inférieur à $N_{S2} = 6$, donc l'état de ce point est estimé être un mouvement dû au bruit, jusqu'à preuve du contraire. Il est clair que cette estimation est inexacte puisque ce point appartient en fait à la même zone de points en mouvement que le point cité précédemment. Les quatre estimations qui vont suivre permettront de tenir compte du fait que cette zone de points en mouvement se prolonge sur les lignes qui suivent la deuxième ligne et permettront finalement de conclure que le point situé sur la deuxième ligne, dixième colonne, est un point en mouvement vrai.

La deuxième estimation est réalisée avec un retard équivalent à une ligne plus un point par rapport à la première estimation et elle consiste à considérer pour chaque point dont le mouvement a été estimé dû au bruit, l'état estimé des points en mouvement qui lui sont connexes et qui appartiennent à la même ligne ou à la ligne suivante. Dans les exemples suivants les points dont l'état estimé est d'être fixe sont représentés par «F», les points dont l'état estimé est un mouvement dû au bruit, jusqu'à preuve du contraire, sont représentés par «B», et les points dont l'état estimé est un mouvement vrai sont représentés par «M». Les états indifférents sont représentés par «X». Le point pour lequel une deuxième estimation est à réaliser est encadré. Il est à remarquer que l'état estimé du point précédant le point considéré et appartenant à la même ligne résulte d'une deuxième estimation alors que l'état estimé du point suivant sur la même ligne et des points voisins sur la ligne suivante résulte d'une première estimation.

```
        X [B] M |
ou      X  X  |

        M [B] X |
ou      X  X  |    ⟹  Le point considéré est en
                        mouvement vrai (M)
        X [B] X |
        M  X  |

ou      X [B] B |
        X  M  |
```

La deuxième estimation conclut que ces points ont un mouvement vrai et non pas un mouvement dû au bruit. En règle générale la deuxième estimation conclut que l'état du point considéré est un mouvement vrai si l'état précédemment estimé

– du point précédent sur la même ligne,

– ou du point suivant sur la même ligne,

– ou du point homologue sur la ligne suivante, est un mouvement vrai,

ou si l'état précédemment estimé du point suivant le point homologue sur la ligne suivante est un mouvement vrai et si l'état précédemment estimé du point suivant le point considéré est un mouvement dû au bruit.

Dans tous les autres cas la deuxième estimation conclut que l'état estimé est un mouvement dû au bruit.

Une troisième estimation est réalisée avec un retard équivalent à une ligne plus un point par rapport à la deuxième estimation pour l'état d'un même point. Cette estimation est identique à la deuxième.

La quatrième estimation détermine un état estimé en fonction de l'état de N' points suivant immédiatement le point considéré sur la même ligne. Elle est donc réalisée avec un retard de N' points par rappport à la troisième estimation pour un même point. N' est un nombre entier tel que $N' \geqslant N_{S2} - p$, où p est le nombre d'estimations réalisées, y compris celle considérée. Dans cet exemple $N_{S2} = 6$, $p = 4$ et $N' = 7$. La quatrième estimation est donc réalisée avec un retard correspondant à sept points par rapport à la troisième estimation, pour un même point.

La valeur N' ainsi choisie est suffisamment grande pour permettre de propager vers la gauche un état estimé être un mouvement vrai, M, plus loin que la propagation réalisée par les (p − 1) estimations précédentes, et suffisamment loin pour pouvoir détecter une zone contenant $N_{S2}$ points en mouvement. Le nombre p des estimations détermine le nombre de lignes prises en compte dans une zone. Dans cet exemple $p = 4$ avec la quatrième estimation, il y a donc quatre lignes prises en compte, donc une zone, formée de quatre points en mouvement connexes et alignés verticalement, peut être détectée. L'expérience montre que les zones où le mouvement est dû au bruit sont allongées parallèlement aux lignes, et non verticalement, c'est pourquoi dans cet exemple la détection est réalisée sur quatre lignes seulement alors qu'une zone de bruit peut contenir jusqu'à 6 points. Il est à la portée de l'homme de l'art de choisir un autre nombre d'estimations, p, et une autre valeur de seuil, $N_{S2}$, en fonction de la quantité de bruit affectant l'image. Si le nombre d'estimations est augmenté, les estimations supplémentaires sont identiques à la deuxième et troisième estimation décrites ci-dessus. La valeur N' est limitée par la complexité de la mise en œuvre. Dans cet exemple $N' = 7$ permet une mise en œuvre simple avec des circuits traitant des octets.

L'état du point considéré est estimé être un mouvement vrai par la quatrième estimation s'il y a parmi ces N' points au moins un point, en mouvement, connexe au point considéré, et s'il y a parmi ces points connexes au moins un point dont l'état précédemment estimé est un mouvement vrai.

Si, par exemple la troisième estimation a donné pour états estimés:

F B B B M M M M

La quatrième estimation, réalisée successivement pour chaque point, donne:

F M M M M M M M

Les flèches désignent les points dont l'état estimé a changé et elles partent du point connexe en mouvement vrai qui justifie ce changement de l'état estimé.

Une variante de la quatrième estimation consiste à effectuer en outre un filtrage des points fixes isolés, seuls ou par deux, dans une zone de points en mouvement. Ce filtrage consiste à considérer comme point en mouvement vrai un point estimé fixe ou en mouvement dû au bruit, qui est précédé et suivi d'un point en mouvement vrai; de même pour un couple de points.

La cinquième estimation est réalisée sans retard par rapport à la quatrième estimation. Elle considère l'état précédemment estimé du point homologue du point considéré sur la ligne précédente. Si cet état est un mouvement vrai l'état estimé du point considéré est alors un mouvement vrai.

M ⟹ Le point considéré est estimé
X B X être en mouvement vrai (M).
X X

Cette cinquième estimation permet d'obtenir une estimation exacte pour certaines portions de zones très tourmentées. Ceci apparaîtra au cours de la description d'un exemple ci-après. En pratique cette cinquième estimation peut être supprimée au prix d'une légère augmentation du nombre de points dont le mouvement est faussement attribué au bruit.

La description ci-dessous explique pas à pas les estimations réalisées pour les points de l'exemple d'image de la figure 1, afin de montrer les interactions entre les estimations successives.

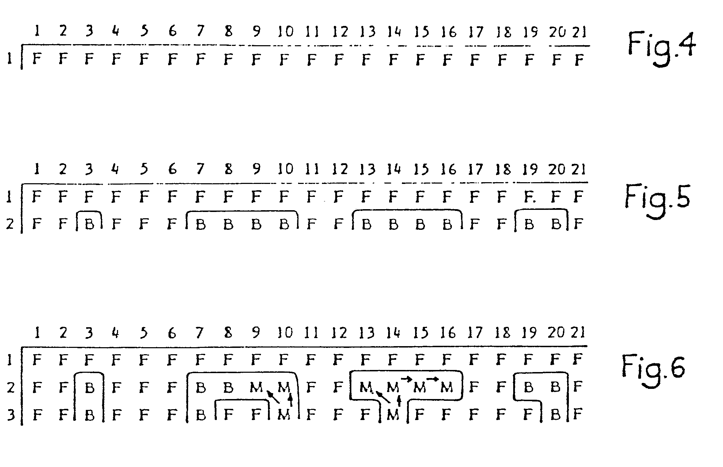

La figure 4 représente les états estimés des points de la première ligne de l'exemple d'image de la figure 1, après la réalisation de la première estimation. La deuxième estimation est ensuite réalisée pour la première ligne, alors que simultanément la première estimation est réalisée pour les points de la deuxième ligne. Les états estimés sont représentés sur la figure 5, ceux de la première ligne sont inchangés car les points de la première ligne sont fixes ce qui est un état certain. Le traitement étant réalisé en temps réel, chaque estimation pour tous les points d'une ligne dure un temps égal à la durée de l'analyse d'une ligne. Les états estimés par la première estimation sont connus avec un retard équivalent à sept points par rapport à une détection de la variation de luminance, car la détermination du nombre C, des points en mouvement connexes qui suivent le point considéré, nécessite de connaître l'état des sept points suivant le point considéré.

Puis la troisième estimation est réalisée pour la première ligne pendant que la deuxième estimation est réalisée pour la deuxième ligne et que la première estimation est réalisée pour la troisième ligne.

La figure 6 représente les états estimés par la première estimation pour les points de la troisième ligne, la deuxième estimation pour les points de la deuxième ligne, et la troisième estimation pour les points de la première ligne. Les états estimés des points de la première ligne sont inchangés. L'état des points situés sur la deuxième ligne, aux neuvième, dixième, treizième, et quatorzième colonnes, sont modifiés car ils sont voisins d'un point en mouvement vrai sur la ligne suivante. Des flèches désignent les points dont l'état estimé a changé, et partent du point en mouvement vrai justifiant ce changement. L'état des points situés sur la deuxième ligne à la quinzième et à la seizième colonne a changé parce que le point qui précède chacun d'eux à un nouvel état estimé qui est un mouvement vrai.

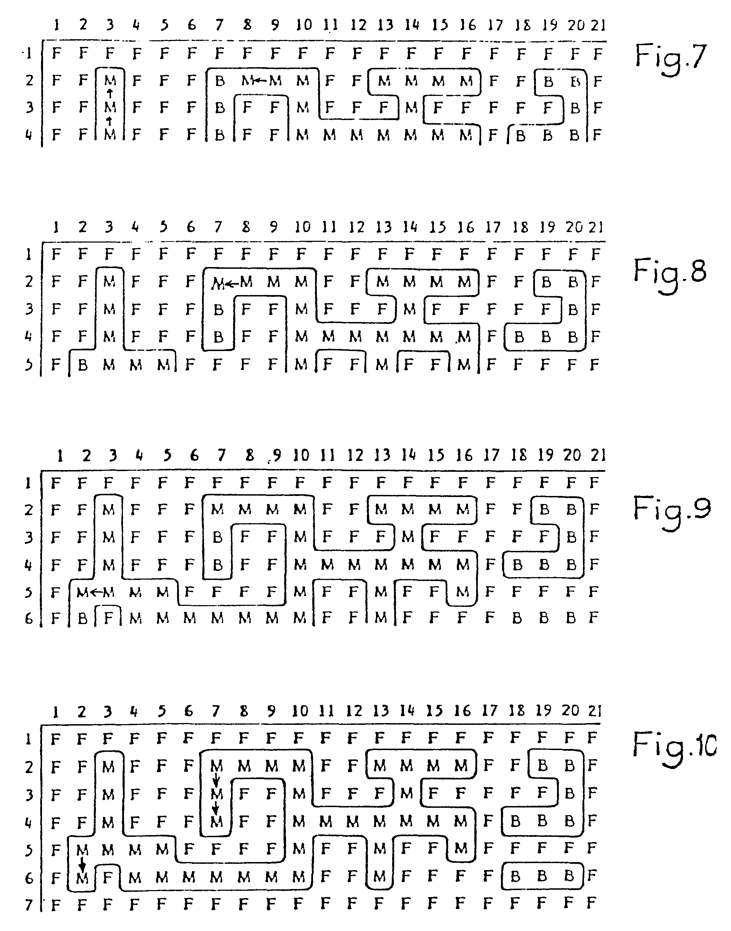

Ensuite une quatrième estimation est réalisée pour les points de la première ligne, une troisième estimation pour les points de la deuxième ligne, une deuxième estimation pour les points de la troisième ligne, et une première estimation pour les points de la quatrième ligne, simultanément. La figure 7 représente les états estimés obtenus. A la suite de la deuxième estimation l'état du point situé sur la troisième ligne, deuxième colonne, est modifié. Puis, à la suite de la troisième estimation, l'état du point situé sur la deuxième ligne, troisième colonne est modifié aussi. Cet exemple montre comment un état estimé mouvement vrai peut être propagé vers le haut de l'image. A la deuxième ligne aussi, huitième colonne, l'état d'un autre point est modifié à la suite de la troisième estimation, parce qu'il est suivi d'un point estimé en mouvement vrai par la deuxième estimation. Cet exemple montre comment un état estimé mouvement vrai peut être propagé de droite à gauche.

Ensuite la cinquième estimation est réalisée pour les points de la première ligne, la quatrième estimation est réalisée pour les points de la deuxième ligne, la troisième estimation est réalisée pour la troisième ligne, la deuxième estimation est réalisée pour la quatrième ligne, et la première estimation est réalisée pour la cinquième ligne, simultanément. Les états estimés sont représentés sur la figure 8. Lors de la deuxième estimation l'état du point situé sur la deuxième ligne, à la septième colonne, est modifié car il est suivi d'un point en mouvement vrai.

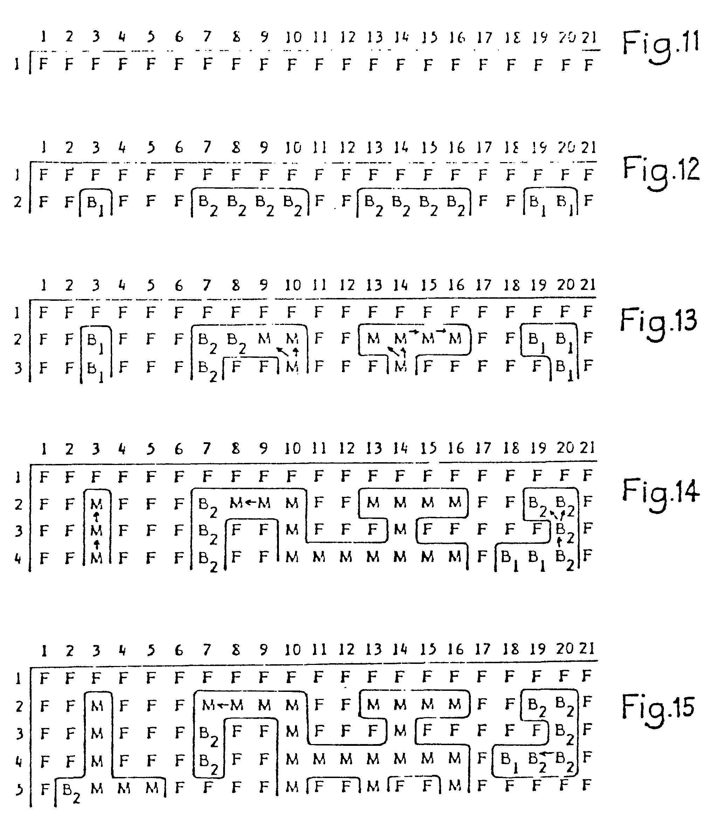

Ensuite la cinquième estimation est réalisée pour les points de la deuxième ligne, la quatrième estimation est réalisée pour les points de la troisième ligne, la troisième estimation est réalisée pour les points de la quatrième ligne, la deuxième estimation est réalisée pour les points de la cinquième ligne, et la première estimation est réalisée pour les points de la sixième ligne, simultanément. Les états estimés sont représentés sur la figure 9. L'état du point situé sur la cinquième ligne, deuxième colonne, est modifié à la suite de la deuxième estimation.

Ensuite la cinquième estimation est réalisée pour les points de la troisième ligne, la quatrième estimation est réalisée pour les points de la quatrième ligne, la troisième estimation est réalisée pour les points de la cinquième ligne, la deuxième estimation est réalisée pour les points de la sixième ligne, et la première estimation est réalisée pour le point de la septième ligne, simultanément. L'état estimé du point situé à la troisième ligne, septième colonne, change à la suite de la troisième estimation car le point homologue sur la ligne précédente et en mouvement vrai.

Ensuite la cinquième estimation est réalisée pour les points de la quatrième ligne, la quatrième estimation est réalisée pour les points de la cinquième ligne, la troisième estimation est réalisée pour les points de la sixième ligne, et la deuxième estimation est réalisée pour les points de la septième ligne, simultanément. L'état estimé du point situé sur la quatrième ligne, septième colonne, change car le point homologue sur la ligne précédente est en mouvement vrai.

Quand la cinquième estimation est réalisée pour le point de la deuxième colonne, sixième ligne, son état estimé change car son point homologue sur la ligne précédente est en mouvement vrai.

A la fin du traitement de cet exemple d'image, les états estimés sont ceux représentés sur la figure 10. Les flèches désignent les états qui ont changé par rapport à ceux de la figure 9. Cet exemple montre comment la cinquième estimation permet de propager l'état estimé mouvement vrai à l'intérieur de portions de zone aux formes complexes. Tous les points de la zone contenant de nombreux points en mouvement ont été ainsi estimés être en mouvement vrai, et ceux appartenant à de petites zones (moins de sept points) ont été estimés être en mouvement dû au bruit.

Chaque état estimé pouvant prendre trois valeurs, il est codé par 2 bits, alors que chaque minorant $N_z$ est codé par 4 bits, quand on limite à 15 sa valeur. Le fait de réaliser les deuxième, troisième, quatrième, et cinquième estimations de l'état d'un point en fonction de l'état des points voisins et non pas en fonction des valeurs $N_z$ de leur minorant permet de réaliser des dispositifs où la capacité des mémoires est réduite à deux bits pour chaque point.

Il apparaît sur l'exemple précédent que la réalisation des première, deuxième, troisième et cinquième estimations permet de détecter une zone de points en mouvement vrai ayant une forme allongée s'étirant verticalement sur quatre lignes, car ces estimations prennent chacune en compte l'état des points sur une ligne voisine. Dans les cas où le bruit engendre des zones où les points en mouvement sont souvent plus nombreux que 6, la valeur de seuil, $N_{S2}$, et le nombre d'estimation doivent être augmentés. Il convient alors d'augmenter le nombre d'estimations du type de la deuxième et de la troisième estimation décrites ci-dessus.

L'estimation de l'état d'un point selon trois valeurs: fixe, ou en mouvement vrai, ou en mouvement dû au bruit constitue une première variante du procédé selon l'invention.

Dans une deuxième variante du procédé selon l'invention l'état estimé d'un point peut avoir quatre valeurs, représentées par «F», «$B_1$», «$B_2$» et «M», qui sont respectivement un état fixe, un mouvement très probablement dû au bruit, un mouvement peu probablement dû au bruit, et un mouvement vrai. L'état d'un point en mouvement est estimé être très probablement dû au bruit lorsque: $N_z \leqslant N_{S1}$. L'état d'un point est estimé être un mouvement peu probablement dû au bruit lorsque:

$N_{S1} < N_z \leqslant N_{S2}$

L'état d'un point est estimé être un mouvement vrai lorsque:

$N_z > N_{s2}$

$N_{S1}$ et $N_{S2}$ étant deux valeurs entières telles que $N_{S2} > N_{S1}$, $N_{S1} = 3$ et $N_{S2} = 6$ par exemple. La discrimination entre deux états de mouvement dû au bruit, permet de réaliser ensuite deux traitements différents sur les valeurs de luminance de ces points. Si, par exemple, la discrimination entre les points en mouvement vrai et les points en mouvement dûs au bruit est suivie d'un traitement d'élimination du bruit, le traitement appliqué aux points dont l'état estimé est $B_1$, est très énergique, et par contre le traitement appliqué aux points dont l'état estimé est $B_2$, est moins énergique, de façon à minimiser la dégradation de l'image dûe à une élimination du bruit effectuée pour des points qui sont en réalité en mouvement vrai, mais dont l'état est faussement estimé être un mouvement dû au bruit, un état estimé être un mouvement dû au bruit n'étant totalement certain.

Pour cette variante les règles de détermination de $N_z$ sont inchangées.

Les règles énoncées précédemment pour la deuxième estimation sont appliquées de la même façon, que l'état B soit un état $B_1$ ou un état $B_2$, mais des cas supplémentaires peuvent être rencontrés:

$$X \;\boxed{B_1}\; B_2$$
$$X \quad X$$

ou

$$B_2 \;\boxed{B_1}\; X$$
$$X \quad X$$

ou

$$X \;\boxed{B_1}\; X$$
$$B_2 \quad X$$

ou

$$X \;\boxed{B_1}\; B_1$$
$$X \quad B_2$$

Dans ces quatre cas le point considéré est en mouvement peu probablement dû au bruit ($B_2$).

Dans les cas autres que ceux-ci et ceux décrits pour la première variante, l'état estimé reste identique à celui estimé par la première estimation, c'est-à-dire un mouvement probablement dû au bruit, $B_1$.

Les règles pour réaliser la troisième estimation sont identiques à celles pour réaliser la deuxième estimation.

La règle pour réaliser la quatrième estimation est constituée par celle décrite pour la première variante, plus la règle concernant le cas suivant: L'état du point considéré est estimé être un mouvement peu probablement dû au bruit, $B_2$, s'il y a, parmi N' points suivant immédiatement le point considéré sur la même ligne, au moins un point en mouvement et connexe au point considéré et s'il y a parmi ces points connexes au moins un point dont l'état précédemment estimé est d'être en mouvement peu probablement dû au bruit, $B_2$, et s'il n'y a pas parmi ces points connexes en mouvement, de point dont l'état est un mouvement vrai, M.

Exemples:

$$F \;\boxed{B_1}\; B_1 \; B_1 \; B_2 \; B_1 \; B_1 \; B_1 \; B_1 \;\Longrightarrow$$

le point considéré est en mouvement peu probablement dû au bruit ($B_2$).

$$F \;\boxed{B_1}\; B_1 \; B_1 \; M \; B_1 \; B_1 \; B_1$$
$$F \;\boxed{B_2}\; B_1 \; B_2 \; M \; B_1 \; B_1 \; B_1 \;\Longrightarrow$$

le point considéré est en mouvement vrai, comme dans la première variante (M).

La règle pour réaliser la cinquième estimation est la même que celle décrite pour la première variante plus le cas suivant: L'état du point considéré est estimé être en mouvement peu probablement dû au bruit, $B_2$, si le point homologue sur la ligne précédente a un mouvement peu probablement dû au bruit. Exemples:

$$X \boxed{B_1} X \overset{M}{\phantom{X}} \quad \Longrightarrow$$

le point considéré a un mouvement vrai (M).

$$X \boxed{B_2} X \overset{M}{\phantom{X}} \quad$$

$$X \boxed{B_1} X \overset{B_2}{\phantom{X}} \quad \Longrightarrow$$

le point considéré a un mouvement peu probablement dû au bruit ($B_2$)

Les figures 11 à 17 représentent les états estimés par les estimations successives pour l'exemple d'image de la figure 1 selon la deuxième variante du procédé selon l'invention. Les valeurs $N_z$ des minorants, représentées sur la figure 3, sont inchangées pour cette deuxième variante.

La figure 11 représente les états estimés par la première estimation pour les points de la première ligne.

La figure 12 représente les états estimés par la première estimation pour les points de la deuxième ligne et par la deuxième estimation pour les points de la première ligne; les états $B_1$ correspondent aux valeurs $3 < N_z \leqslant 6$ et les états $B_2$ correspondent aux valeurs $N_z > 6$.

La figure 13 représente les états estimés par la première estimation pour la troisième ligne, les états estimés par la deuxième estimation pour la deuxième ligne et les états estimés par la troisième estimation pour la première ligne. Jusque là il n'y a pas de différence notable par rapport à la première variante.

La figure 14 représente les états estimés par la première estimation pour la quatrième ligne, les états estimés par la deuxième estimation pour la troisième ligne, les états estimés par la troisième estimation pour la deuxième ligne et les états estimés par la quatrième estimation pour la première ligne. Il est à remarquer que, dans la vingtième colonne, sur la troisième ligne, un état estimé $B_1$ est remplacé par un état estimé $B_2$ car le point homologue du point considéré sur la ligne suivante a un état estimé $B_2$. Puis le même changement est effectué sur la deuxième ligne de la vingtième colonne. A la dix-neuvième colonne de la deuxième ligne un état $B_1$ est remplacé par un état $B_2$, car le point considéré est suivi d'un point en mouvement peu probablement dû au bruit, $B_1$, et a pour homologue sur la ligne suivante un point en mouvement peu probablement dû au bruit, $B_2$.

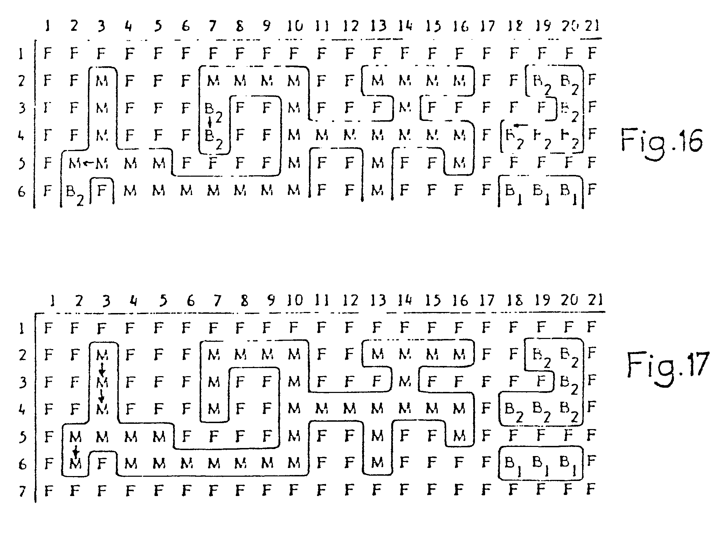

La figure 15 représente les états estimés par la première estimation pour les points de la cinquième ligne, les états estimés par la deuxième estimation pour les points de la quatrième ligne, les états estimés par la troisième estimation pour les points de la troisième ligne, les états estimés par la quatrième estimation pour les points de la deuxième ligne, et les états estimés par la cinquième estimation pour les points de la première ligne; il est à remarquer sur la quatrième ligne, dix-neuvième colonne, qu'un état $B_1$ est remplacé par un état $B_2$ car le point considéré est suivi d'un point dont l'état estimé est $B_2$.

La figure 16 représente les états estimés par la première estimation pour les points de la sixième ligne, les états estimés par la deuxième estimation pour les points de la cinquième ligne, les états estimés par la troisième estimation pour les points de la quatrième ligne, les états estimés par la quatrième estimation pour les points de la troisième ligne, et les états estimés par la cinquième estimation pour les points de la deuxième ligne. Il est à remarquer sur la quatrième ligne, dix-huitième colonne, qu'un état $B_1$ est remplacé par un état $B_2$ parce que le point considéré est suivi d'un point dont l'état est $B_2$.

La figure 17 représente les états estimés à la fin du traitement de toute l'image représentée à la figure 1. La détermination d'une cinquième estimation pour les points de la troisième ligne, puis pour les points de la quatrième ligne, puis pour les points de la sixième ligne provoque le remplacement d'un état $B_2$ par un état M dans la septième colonne à la troisième et à la quatrième ligne, et dans la deuxième colonne à la sixième ligne. Ces changements d'état sont désignés par des flèches. Comme pour la première variante du procédé selon l'invention il y a mise en évidence d'une zone de points en mouvement vrai et de deux zones de points en mouvement dû au bruit, mais l'une de ces dernières est estimée très probablement due au bruit car elle n'a que trois points, alors que l'autre est estimée peu probablement due au bruit car son nombre de points, cinq, est proche de la valeur seuil fixée à six.

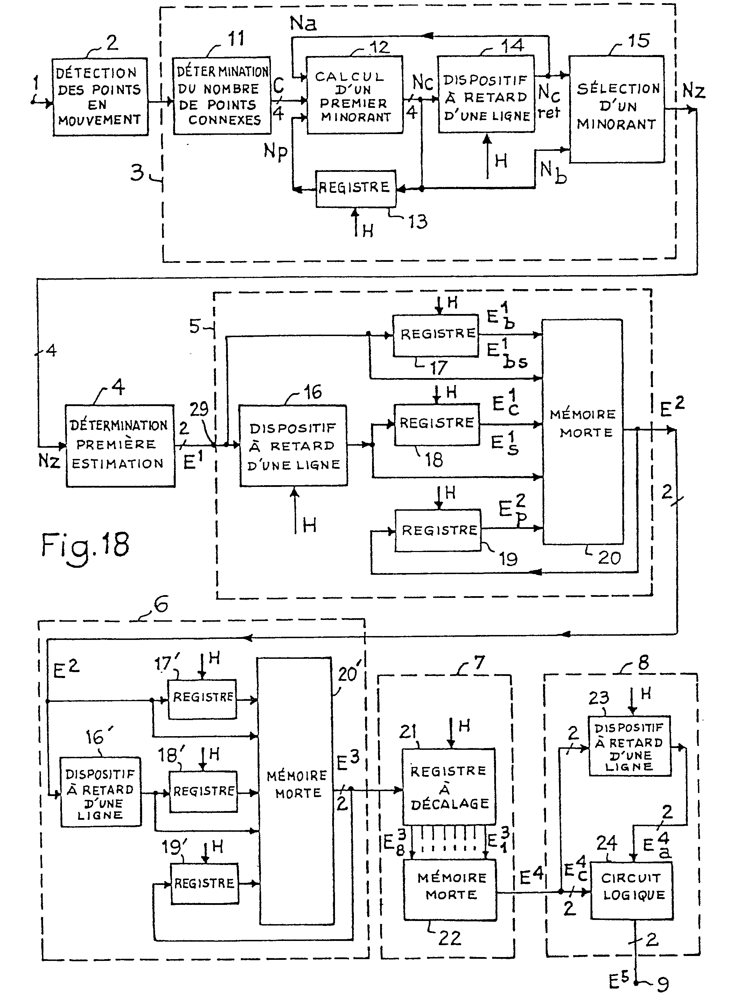

La figure 18 représente le schéma synoptique d'un exemple de réalisation d'un dispositif détecteur de mouvement pour la mise en œuvre de la première variante du procédé selon l'invention. Ce dispositif comporte une borne d'entrée 1 recevant une valeur numérique de luminance pour chaque point d'une image en cours d'analyse, des moyens 2 de détection des points en mouvement, des moyens 3 de calcul d'un minorant du nombre de points d'une zone de points en mouvement connexes, des moyens 4 de détermination d'une première estimation de l'état d'un point, des moyens 5 de détermination d'une deuxième estimation, des moyens 6 de détermination d'une troisième estimation, des moyens 7 de détermination d'une quatrième estimation, des moyens 8 de détermination d'une cinquième estimation, et une borne de sortie 9 fournissant un mot binaire de deux bits indiquant pour chaque point d'image son état, c'est-à-dire être fixe, ou être en mouvement vrai, ou être en mouvement dû au bruit. La borne d'entrée 1 est reliée à une entrée des moyens 2 de détection des points en mouvement, et une sortie de celui-ci est reliée à une entrée des moyens 3. Les moyens 3 comportent des moyens 11 de détermination du nombre de points connexes à un point donné et le suivant sur une même ligne, des moyens 12 de calcul d'un premier minorant du nombre de points de la zone de points en mouvement à laquelle appartient le point considéré, un dispositif 14 à retard d'une ligne, un registre 13, et des moyens 15 de sélection d'un minorant du nombre de points de la zone à laquelle appartient le point considéré. L'entrée des moyens 3 est constituée par l'entrée des moyens 11, ceux-ci ont une sortie reliée à une première entrée des moyens 12 de calcul d'un premier minorant. Une deuxième et une troisième entrée des moyens 12 sont reliées respectivement à une sortie du dispositif 14 à retard d'une ligne et à une sortie du registre 13. Une sortie des moyens 12 est reliée à une entrée du dispositif 14 à retard d'une ligne, à une première entrée des moyens 15 de sélection d'un minorant, et à une entrée de données du registre 13. Le registre 13 stocke un mot de deux bits et possède une entrée de commande recevant un signal d'horloge H dont la période est égale à la durée d'analyse d'un point d'image. Le dispositif 14 est constitué par un registre à décalage, il stocke des mots de deux bits et son nombre d'étage correspond à une ligne d'image; il possède une entrée de commande recevant le signal d'horloge H. Une deuxième entrée et une sortie des moyens 15 sont reliées respectivement à la sortie du dispositif 14 à retard d'une ligne et à la sortie des moyens 3 de calcul d'un minorant. Cette sortie est reliée à une entrée des moyens 4 de détermination d'une première estimation, et une sortie des moyens 4 est reliée à une entrée des moyens 5 de détermination d'une deuxième estimation.

Les moyens 5 comportent un dispositif 16 à retard d'une ligne, trois registres 17, 18 et 19, et une mémoire morte 20. Une entrée du dispositif 16 à retard d'une ligne constitue l'entrée des moyens 5. La mémoire morte 20 comporte cinq entrées d'adresse recevant chacune deux bits, et une sortie de données ayant deux bits, cette sortie constituant une sortie des moyens 5. Une première, une deuxième, une troisième, une quatrième, et une cinquième entrée d'adresse de la mémoire morte 20 sont reliées respectivement à une sortie du registre 17, à l'entrée des moyens 5, à une sortie du registre 18, à une sortie du dispositif 16 à retard d'une ligne, et à une sortie du registre 19. Une entrée du registre 17 est reliée à l'entrée des moyens 5, une entrée du registre 18 est reliée à la sortie du dispositif 16 à retard d'une ligne, et une entrée du registre 19 est reliée à la sortie de la mémoire morte 20. Chacun des registres 17, 18, 19, a une capacité de deux bits en parallèle et possède une entrée de commande recevant le signal d'horloge H.

Les moyens 6 de détermination d'une troisième estimation comportent une entrée reliée à la sortie des moyens 5 et une sortie reliée à une entrée des moyens 7 de détermination d'une quatrième estimation. Les moyens 6 comportent des éléments identiques à ceux des moyens 5, leur référence numérique est différenciée par le signe prime.

Les moyens 7 de détermination d'une quatrième estimation comportent un registre à décalage 21 à huit étages, chaque étage stockant deux bits, et une mémoire morte 22. Une entrée série du registre 21 constitue l'entrée des moyens 7, et une sortie de la mémoire morte 22 constitue leur sortie. La mémoire morte 22 comporte huit entrées d'adresse recevant chacune deux bits, reliées respectivement à huit sorties du registre à décalage 21. Le registre à décalage 21 possède une entrée de commande recevant le signal d'horloge H.

Les moyens 8 de détermination d'une cinquième estimation comportent un dispositif 23 à retard d'une ligne et un circuit logique 24. Une entrée des moyens 8 est reliée d'une part à la sortie des moyens 7 et d'autre part à une entrée série du dispositif 23 et à une première entrée du circuit logique 24. Le dispositif 23 est constitué par un registre à décalage, il possède une entrée de commande recevant le signal d'horloge H et une sortie reliée à une seconde entrée du circuit logique 24. Une sortie du circuit logique 24 constitue la sortie des moyens 8 et est reliée à la borne de sortie 9 du dispositif selon l'invention.

A l'instant considéré la borne d'entrée 1 reçoit une valeur de luminance d'un point. Cette valeur est comparée par rapport à la valeur de la luminance du point homologue dans l'image précédente par les moyens 2 de détection des points en mouvement. Si la valeur de luminance considérée a varié par rapport à celle du point homologue de l'image précédente les moyens 2 fournissent un signal logique à l'entrée des moyens 11 qui déterminent alors le nombre de points en mouvement connexes au point considéré et appartenant à la même ligne. Les moyens 11 fournissent, avec un retard correspondant à un point, un mot binaire de quatre bits constitué d'une valeur C, à la première entrée des moyens 12 de calcul d'un premier minorant. Il est à noter qu'à un instant donné le point traité par les moyens 3, le point traité par les moyens 4, etc..., sont des points différents de celui pour lequel un état estimé est fourni sur la borne de sortie 9 à cause des retards introduits par les moyens de calcul. Les moyens de calcul 12 déterminent une valeur $N_c$, constituant un premier minorant du nombre de points de la zone de points en mouvement à laquelle appartient le point considéré. Cette valeur est déterminée à partir de la valeur $N_p$ du minorant déterminé pour le point précédent, et de la valeur $N_a$ du minorant calculé

pour le point homologue sur la ligne précédente. La valeur $N_c$ est stockée dans le dispositif 14 à retard d'une ligne. A l'instant considéré le dispositif 14 restitue une valeur notée $N_{cret}$ qui constitue la valeur $N_a$. A l'instant considéré la sortie du registre 13 fournit la valeur $N_p$ à la troisième entrée des moyens 12, la valeur $N_p$ ayant été stockée pendant une durée correspondant à un point. Le fonctionnement détaillé des moyens de calcul 12, des moyens 11 de détermination du nombre de points en mouvement connexes, et des moyens 2 de détection des points en mouvement, est exposé dans la suite de la description.

Il faut bien distinguer le point considéré pour le calcul d'un premier minorant et le point considéré pour la sélection d'un minorant. A un instant donné ce n'est pas le même point car le dispositif 14 introduit un retard équivalent à une ligne. La valeur $N_c$ calculée à l'instant considéré par les moyens 12 constitue, à l'instant considéré, la valeur $N_b$ du premier minorant correspondant au point homologue, sur la ligne suivante, du point considéré pour la sélection. La valeur $N_{cret}$ fournie par la sortie du dispositif 14 constitue la valeur du premier minorant correspondant au point considéré, pour la sélection. Les moyens 15 de sélection reçoivent les valeurs $N_b$ et $N_{cret}$ respectivement sur leur première et deuxième entrée et fournissent sur leur sortie une valeur $N_z$ codée par un mot binaire de quatre bits qui est appliqué à l'entrée des moyens 4 de détermination d'une première estimation.

Les moyens 4 déterminent si la valeur $N_z$ est supérieure à zéro, d'une part, et si elle est supérieure à la valeur seuil $N_{s2} = 6$, d'autre part. Les moyens 4 fournissent une valeur $E^1$ de l'état estimé d'un point, cet état est codé par un mot binaire de deux bits. La valeur $E^1$ est fournie à l'entrée des moyens 5 où elle est stockée dans le registre 17 et dans le dispositif 16 sous l'action du signal d'horloge H.

A l'instant considéré le point considéré pour la deuxième estimation est un point éloigné d'une ligne plus un point par rapport au point considéré pour la première estimation. L'état estimé précédemment par la première estimation pour ce point a pour valeur $E_c^1$ qui est fournie par la sortie du registre 18. L'état estimé précédemment par la première estimation pour le point suivant le point considéré a pour valeur $E_s^1$ qui est fournie par la sortie du dispositif 16 à retard d'une ligne. L'état estimé précédemment par la première estimation pour le point homologue du point considéré sur la ligne suivante a pour valeur $E_b^1$ qui est fournie par le registre 17. L'état estimé par la première estimation pour le point suivant ce point homologue a pour valeur $E_{bs}^1$ qui est fournie par la sortie des moyens 4, et qui est donc égale à la valeur estimée $E^1$ de l'état du point considéré, à l'instant considéré, pour la première estimation. D'autre part la sortie du registre 19 fournit une valeur $E_p^2$ qui est l'état estimé précédemment par la deuxième estimation pour le point précédant le point considéré, cette valeur ayant été déterminée immédiatement précédemment et ayant été stockée par le registre 19 pendant une durée correspondant à un point. L'ensemble des valeurs $E_b^1$, $E_{bs}^1$, $E_c^1$, $E_s^1$, et $E_p^2$ constitue une adresse de dix bits pour la mémoire morte 20, celle-ci fournit sur sa sortie une valeur $E^2$ constituée de deux bits selon la table de vérité ci-dessous où les états sont représentés non pas sous forme binaire mais avec les symboles F, M, et B, définis précédemment, avec le symbole X pour un état quelconque, et un symbole Y pour un état quelconque sauf l'état de mouvement vrai.

| $E_b^1$ | $E_{bs}^1$ | $E_c^1$ | $E_s^1$ | $E_p^2$ | $E^2$ |
|---|---|---|---|---|---|
| X | X | F | X | X | F |
| X | X | M | X | X | M |
| M | X | B | X | X | M |
| X | M | B | B | X | M |
| X | X | B | M | X | M |
| X | X | B | X | M | M |
| Y | Y | B | Y | Y | B |

Les moyens 6 de détermination d'une troisième estimation sont constitués comme les moyens 5 et fonctionnent de la même manière. Leur sortie fournit une valeur $E^3$ d'un état estimé à l'entrée des moyens 7 où cette valeur est stockée dans le registre à décalage 21. A l'instant considéré une première sortie du registre à décalage 21 fournit une valeur $E_1^3$ de l'état estimé précédemment par la troisième estimation pour le point qui est considéré pour réaliser la quatrième estimation; une deuxième sortie fournit une valeur $E_2^3$ de l'état estimé correspondant au point suivant, une troisième sortie fournit une valeur $E_3^3$ de l'état estimé du point suivant le point suivant, etc. Les valeurs fournies par les huit sorties du registre à décalage 21 constituent une adresse de 16 bits pour la mémoire morte 22, et celle-ci fournit sur sa sortie un mot binaire de deux bits constituant une valeur $E^4$ de l'état estimé pour le point considéré par la quatrième estimation. Le fonctionnement de la mémoire morte 22 est représenté par la table de vérité ci-dessous.

| $E_1^3$ | $E_2^3$ | $E_3^3$ | $E_4^3$ | $E_5^3$ | $E_6^3$ | $E_7^3$ | $E_8^3$ | $E^4$ |
|---|---|---|---|---|---|---|---|---|
| F | X | X | X | X | X | X | X | F |
| M | X | X | X | X | X | X | X | M |
| B | M | X | X | X | X | X | X | M |
| B | B | M | X | X | X | X | X | M |
| B | B | B | M | X | X | X | X | M |
| B | B | B | B | M | X | X | X | M |
| B | B | B | B | B | M | X | X | M |
| B | B | B | B | B | B | M | X | M |
| B | B | B | B | B | B | B | M | M |
| B | F | X | X | X | X | X | X | B |
| B | Y | F | X | X | X | X | X | B |
| B | Y | Y | F | X | X | X | X | B |
| B | Y | Y | Y | F | X | X | X | B |
| B | Y | Y | Y | Y | F | X | X | B |
| B | Y | Y | Y | Y | Y | F | X | B |
| B | Y | Y | Y | Y | Y | Y | F | B |
| B | Y | Y | Y | Y | Y | Y | Y | B |

Dans une variante de réalisation réalisant en outre un filtrage des points non en mouvement vrai isolés, seuls ou par deux, dans une zone de points en mouvement, le filtrage peut être réalisé par une programmation particulière de la mémoire morte 22, selon la table de vérité ci-dessous. Le point considéré pour la quatrième estimation ne correspond pas à l'état $E_1^3$, mais à l'état $E_2^3$, car l'état $E_1^3$ du point précédent intervient dans la décision de filtrage. Par contre, le type des six points suivant est pris en compte.

| point précédent $E_1^3$ | point considéré $E_2^3$ | points suivants | | | | | | |
|---|---|---|---|---|---|---|---|---|
| | | $E_3^3$ | $E_4^3$ | $E_5^3$ | $E_6^3$ | $E_7^3$ | $E_8^3$ | $E^4$ |
| Y | F | X | X | X | X | X | X | F |
| Y | M | X | X | X | X | X | X | M |
| Y | B | M | X | X | X | X | X | M |
| Y | B | B | M | X | X | X | X | M |
| Y | B | B | B | M | X | X | X | M |
| Y | B | B | B | B | M | X | X | M |
| Y | B | B | B | B | B | M | X | M |
| Y | B | B | B | B | B | B | M | M |
| Y | B | B | B | B | B | B | B | B |
| Y | B | F | X | X | X | X | X | B |
| Y | B | Y | F | X | X | X | X | B |
| Y | B | Y | Y | F | X | X | X | B |
| Y | B | Y | Y | Y | F | X | X | B |
| Y | B | Y | Y | Y | Y | F | X | B |
| Y | B | Y | Y | Y | Y | Y | F | B |
| M | [F] | M | X | X | X | X | X | M |
| M | [F] | Y | M | X | X | X | X | M |
| M | F | Y | Y | X | X | X | X | F |
| M | M | X | X | X | X | X | X | M |
| M | B | M | X | X | X | X | X | M |
| M | B | B | M | X | X | X | X | M |
| M | B | B | B | M | X | X | X | M |
| M | B | B | B | B | M | X | X | M |
| M | B | B | B | B | B | M | X | M |
| M | B | B | B | B | B | B | M | M |
| M | B | F | M | X | X | X | X | M |
| M | B | Y | F | X | X | X | X | B |
| M | B | Y | Y | F | X | X | X | B |
| M | B | Y | Y | Y | F | X | X | B |
| M | B | Y | Y | Y | Y | F | X | B |
| M | B | Y | Y | Y | Y | Y | F | B |
| M | B | Y | Y | Y | Y | Y | Y | B |

Les points encadrés sont ceux pour lesquels le filtrage est effectif (16[ième] et 17[ième] ligne du tableau ci-dessus).

La valeur $E^4$ de l'état estimé par les moyens 7 est fournie d'une part à l'entrée du dispositif 23 à retard d'une ligne et d'autre part à la première entrée du circuit logique 24. $E^4$ constitue l'état $E_c^4$ précédemment estimé du point considéré pour la cinquième estimation. La sortie du dispositif 23 fournit une valeur $E_a^4$ qui constitue l'état, précédemment estimé par la quatrième estimation, pour le point homologue du point considéré sur la ligne précédente. Le circuit logique 24 reçoit donc deux mots binaires de deux bits et fournit à la sortie du dispositif selon l'invention un mot binaire de deux bits selon la table de vérité ci-dessous. Ce mot binaire constitue la valeur $E^5$ de l'état estimé du point considéré pour la cinquième estimation.

| $E_c^4$ | $E_a^4$ | $E^5$ |
|---|---|---|
| F | X | F |
| M | X | M |
| B | M | M |
| B | B | B |
| B | M | B |

La réalisation du circuit logique 24 est à la portée de l'homme de l'art. Elle peut être faite à l'aide d'un réseau de portes logiques car le nombre de variables d'entrée est seulement de quatre, ou bien elle peut être faite à l'aide d'une mémoire morte.

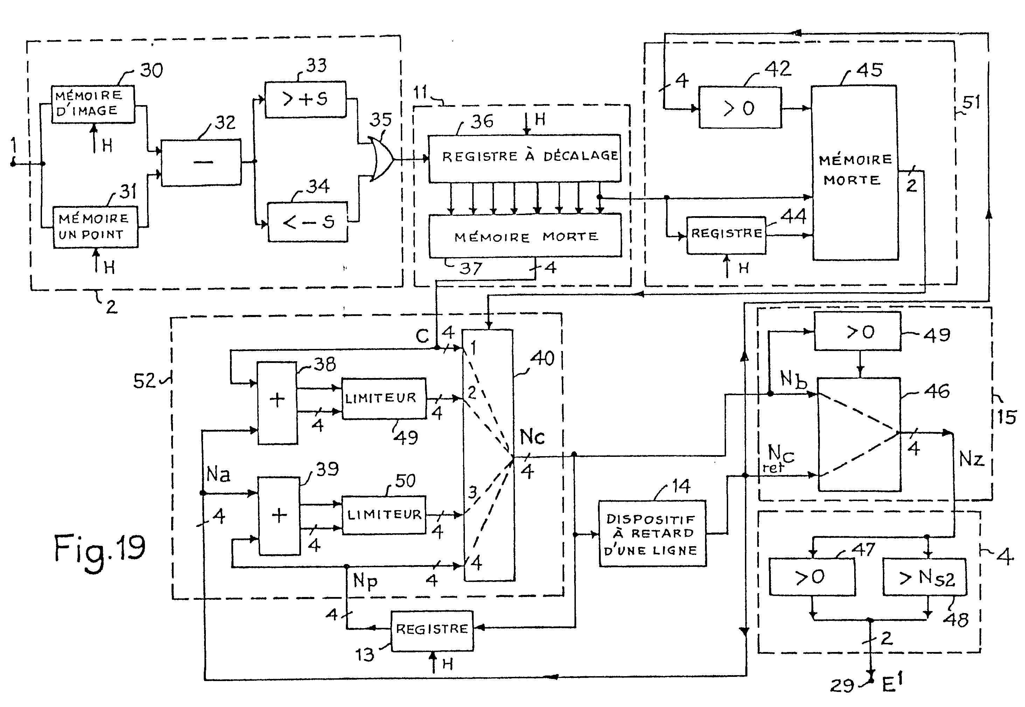

La figure 19 représente un schéma synoptique plus détaillé d'une partie du dispositif représenté sur la figure 18. Les moyens 12 de calcul d'un premier minorant sont constitués de moyens de commande 51 et d'un dispositif de calcul 52.

Les moyens 2 de détection des points en mouvement sont constitués d'une mémoire vive 30, dite mémoire d'image, d'une mémoire vive 31, dite mémoire un point, d'un soustracteur 32, de deux comparateurs 33 et 34, et d'une porte logique OU 35. La borne d'entrée 1 du dispositif selon l'invention est reliée d'une part à une entrée de la mémoire d'image 30 et à une entrée de la mémoire un point 31. Les mémoires 30 et 31 sont des mémoires à décalage commandées chacune par le signal d'horloge H. Elles ont chacune une sortie, ces sorties sont respectivement reliées à deux entrées du soustracteur 32, et la sortie du soustracteur 32 est reliée à une entrée de chacun des comparateurs 33 et 34. Chacun des comparateurs 33 et 34 possède une sortie reliée respectivement à une entrée de la porte OU 35. La sortie de la porte OU 35 constitue la sortie des moyens 2.

Les moyens 11 de détermination du nombre de points en mouvement connexes au point considéré sont constitués d'un registre à décalage 36 à huit étages et d'une mémoire morte 37. Une entrée série du registre à décalage 36 constitue l'entrée des moyens 11. Le registre à décalage 36 possède une entrée de commande recevant le signal d'horloge H et huit sorties parallèles qui sont reliées respectivement à huit entrées d'adresse de la mémoire morte 37. Celle-ci possède une sortie de données fournissant un mot binaire de quatre bits et constituant une première sortie des moyens 11 reliée à la première entrée des moyens 12 et représentée sur la figure 18. Les moyens 11 possèdent une seconde sortie constituée par une des sorties parallèles du registre à décalage 36 telle que les données qu'elle fournit sont retardées de huit périodes d'horloge par le registre 36.

Le dispositif 52 comporte deux additionneurs pour mots de quatre bits, 38 et 39, deux dispositifs limiteurs 49 et 50, et un multiplexeur 40 à quatre entrées et une sortie pour mots de quatre bits. Une première entrée du dispositif de calcul 52 constitue la première entrée des moyens 12 et est reliée à une première entrée de l'additionneur 38 d'une part, et à une première entrée du multiplexeur 40 d'autre part. Une deuxième entrée des moyens de calcul 52 constitue la deuxième entrée des moyens 12 et est reliée respectivement à une deuxième entrée de l'additionneur 38 et à une première entrée de l'additionneur 39. Une troisième entrée du dispositif de calcul 52 constitue la troisième entrée des moyens 12 et est reliée d'une part à une deuxième entrée de l'additionneur 39 et à la quatrième entrée du multiplexeur 40. Les additionneurs 38 et 39 possèdent chacun une première sortie fournissant un mot de quatre bits et une seconde sortie fournissant un bit de retenue, ces sorties sont reliées respectivement à une première et à une deuxième entrée du limiteur 49 et du limiteur 50 respectivement. Les limiteurs 49 et 50 ont chacun une sortie fournissant quatre bits respectivement à la deuxième et à la troisième entrée du multiplexeur 40. Le multiplexeur 40 possède une entrée de commande reliée à une quatrième entrée du dispositif de calcul 52 et possède une sortie constituant la sortie des moyens 12 et fournissant un mot de quatre bits.

Les moyens de commande 51 sont constitués d'un comparateur 42, d'un registre 44, et d'une mémoire morte 45. Une première et une seconde entrée des moyens de commande 51 reçoivent respectivement un bit et quatre bits fournis respectivement par la seconde sortie des moyens 11 et par la sortie du dispositif 14 à retard d'une ligne. Une sortie fournit un mot de deux bits à la quatrième entrée du dispositif de calcul 52. La mémoire morte 45 possède une première, une deuxième, et une troisième entrée d'adresse recevant chacune un bit, et possède une sortie constituant la sortie des moyens de commande 51. La première entrée des moyens de commande 51 est reliée à la deuxième entrée d'adresse de la mémoire morte 45 et à une entrée de données du registre 44. La deuxième entrée des moyens de commande 51 est reliée à une entrée du comparateur 42, et la sortie de celui-ci est reliée à la première entrée d'adresse de la mémoire morte 45. Une sortie de donnée du registre 44 est reliée à la troisième entrée d'adresse de la mémoire morte 45. Le registre 44 est un registre à un étage stockant un bit, et est commandé par une entrée recevant le signal d'horloge H.

Les moyens 15 de sélection d'un minorant sont constitués d'un multiplexeur 46 et d'un comparateur 49, le multiplexeur 46 étant commandé par un signal logique fourni par le comparateur 49. Outre une entrée de commande, le multiplexeur 46 possède une première entrée, une seconde entrée et une sortie qui constituent respectivement la première entrée, la seconde entrée et la sortie des moyens 15. Le multiplexeur 49 reçoit et transmet des mots de quatre bits. Une entrée du comparateur 49 est reliée à la première entrée des moyens 15, et une sortie est reliée à une entrée de commande du multiplexeur 46.

Les moyens 4 de détermination d'une première estimation de l'état d'un point sont constitués de deux comparateurs 47 et 48 ayant chacun une entrée, pour quatre bits, reliée à l'entrée des moyens 4, et ayant chacun une sortie fournissant un bit. Ces deux sorties sont réunies pour constituer la sortie des moyens 4 fournissant deux bits.

Pour chaque point de l'image analysée une valeur de luminance, sous forme numérique, est reçue sur la borne d'entrée 1 puis est stockée dans la mémoire d'image 30 et dans la mémoire un point 31 sous l'action du signal d'horloge H. La mémoire d'image 30 est constituée, par exemple, par un registre à décalage ayant une capacité correspondant au nombre de points d'une image. La mémoire un point 31 est constituée d'un registre à un seul étage. Le soustracteur 32 calcule la valeur de la différence entre la luminance d'un point, correspondant à la valeur stockée dans la mémoire 31, et celle d'un point homologue dans l'image précédente, correspondant à la valeur fournie par la sortie de la mémoire d'image 30. La valeur de cette différence est comparée par rapport à deux valeurs fixées $+S$ et $-S$, respectivement par les comparateurs 33 et 34. Si la valeur algébrique de la différence de luminance est supérieure à $+S$ ou inférieure à $-S$ la sortie de la porte OU 35 fournit un signal logique indiquant que le point considéré a un mouvement. La valeur S est une tolérance permettant de négliger les variations de luminance dûes au bruit lorsque ces variations ont une faible valeur.

La valeur du signal logique fourni par la sortie de la porte OU 35 est inscrite dans le registre à décalage 36 sous l'action du signal d'horloge H. Après huit périodes de l'horloge H la valeur de ce signal logique est fournie par la huitième sortie du registre 36 qui constitue la seconde sortie des moyens 11. Au même instant la première, ..., et la septième sortie du registre à décalage 36 fournissent alors les signaux logiques correspondant à l'état des sept points suivant le point considéré sur la même ligne. Ces huit valeurs binaires constituent une adresse pour la mémoire morte 37 qui fournit alors un mot binaire de quatre bits selon la table de vérité ci-dessous, où les symboles X représentent des valeurs indifférentes.

| Entrées | | | | | | | | Sorties | | | |
| $8^{ème}$ | $7^{ème}$ | $6^{ème}$ | $5^{ème}$ | $4^{ème}$ | $3^{ème}$ | $2^{ème}$ | $1^{ère}$ | $2^3$ | $2^2$ | $2^1$ | $2^0$ |
|---|---|---|---|---|---|---|---|---|---|---|---|
| 0 | X | X | X | X | X | X | X | 0 | 0 | 0 | 0 |
| 1 | 0 | X | X | X | X | X | X | 0 | 0 | 0 | 1 |
| 1 | 1 | 0 | X | X | X | X | X | 0 | 0 | 1 | 0 |
| 1 | 1 | 1 | 0 | X | X | X | X | 0 | 0 | 1 | 1 |
| 1 | 1 | 1 | 1 | 0 | X | X | X | 0 | 1 | 0 | 0 |

| Entrées 8ème | 7ème | 6ème | 5ème | 4ème | 3ème | 2ème | 1ère | Sorties $2^3$ | $2^2$ | $2^1$ | $2^0$ |
|---|---|---|---|---|---|---|---|---|---|---|---|
| 1 | 1 | 1 | 1 | 1 | 0 | X | X | 0 | 1 | 0 | 1 |
| 1 | 1 | 1 | 1 | 1 | 1 | 0 | X | 0 | 1 | 1 | 0 |
| 1 | 1 | 1 | 1 | 1 | 1 | 1 | 1 | 1 | 0 | 0 | 0 |

La valeur du mot binaire fourni est égale au nombre de points en mouvement connexes au point considéré, parmi les sept points qui le suivent.

La valeur $N_c$ d'un premier minorant, pour le point considéré, est constituée:

– soit par la valeur C fournie par la sortie des moyens 11 de détermination du nombre de points en mouvement connexes;

– soit par la valeur $C + N_a$ fournie par la sortie de l'additionneur 38 avec une limitation à 15 par le limiteur 49;

– soit par la valeur $N_a + N_p$ fournie par la sortie de l'additionneur 39 avec une limitation à 15 par le limiteur 50;

– soit par la valeur $N_p$ fournie par la sortie du registre 13;

La sélection est effectuée par le multiplexeur 40 commandé par les moyens de commande 51. Le limiteur 49 est constitué, par exemple, de quatre portes logiques OU ayant une entrée commune reliée à la sortie de retenue de l'additionneur 38, ayant chacune une entrée recevant un des bits fournis par l'additionneur 38, et ayant chacune une sortie, les quatre sorties constituant la sortie du limiteur 49 et fournissant quatre bits. Ainsi quand la sortie de retenue de l'additionneur 38 fournit une valeur logique 1 les quatre sorties du limiteur 49 fournissent quatre valeurs logiques 1 qui forment un mot binaire de valeur décimale 15. Le limiteur 50 est constitué comme le limiteur 49.

Les signaux de commande du multiplexeur 40 sont fournis par la sortie de la mémoire morte 45 des moyens de commande 51. Ces signaux sont déterminés en fonction de l'état de mouvement ou de non mouvement du point considéré, du point précédant le point considéré sur la même ligne, du point homologue du point considéré sur la ligne précédente, et du point précédant ce point homologue. La huitième sortie du registre à décalage 36 fournit une valeur logique traduisant l'état du point considéré pour la détermination d'un premier minorant. Cette valeur logique est égale à 1 si ce point est en mouvement. Cette valeur logique est stockée dans le registre 44 pendant une durée correspondant à un point, la sortie du registre 44 fournit donc la valeur logique traduisant l'état du point précédant le point considéré. La sortie du dispositif 14 à retard d'une ligne fournit à l'entrée du comparateur 42 la valeur $N_a$ du premier minorant déterminé pour le point homologue du point considéré sur la ligne précédente. Si la valeur $N_a$ est supérieure à 0 la sortie du comparateur 42 fournit un signal logique de valeur 1 à la première entrée d'adresse de la mémoire morte 45. La mémoire morte 45 fournit

les signaux de commande du multiplexeur 40 selon la table de vérité ci-dessous.

Les symboles 1, 2, 3 et 4 correspondent à la mise en relation respectivement de la première, de la deuxième, de la troisième et de la quatrième entrée du multiplexeur 40 avec sa sortie.

| entrées de la mémoire 45 1ème | 2ème | 3ème | commande du multi- plexeur 40 | valeur sé- lectionnée pour $N_c$ |
|---|---|---|---|---|
| X | 0 | X | 1 | C = 0 |
| 0 | 1 | 0 | 1 | C |
| 1 | 1 | 0 | 2 | $C + N_a$ |
| 1 | 1 | 1 | 3 | $N_a + N_p$ |
| 0 | 1 | 1 | 4 | $N_p$ |

La valeur $N_c$ fournie par la sortie des moyens 52 est stockée par le dispositif 14 à retard d'une ligne. A l'instant considéré, le dispositif 14 fournit une valeur $N_{cret}$ à la seconde entrée du multiplexeur 46. La valeur $N_c$ fournie au même instant par les moyens de calcul 52, constitue la valeur $N_b$ du premier minorant correspondant au point homologue sur la ligne suivante pour le point considéré dans l'opération de sélection d'un minorant. La valeur $N_b$ est comparée à la valeur 0 par le comparateur 49. Si elle est supérieure à zéro, c'est-à-dire si le point homologue sur la ligne suivante est en mouvement, le comparateur 49 génère un signal logique tel que le multiplexeur 46 transmet la valeur $N_b$ qui constitue alors la valeur $N_z$ du minorant recherché. Dans le cas contraire le multiplexeur 46 transmet la valeur $N_{cret}$ fournie par le dispositif 14.

La valeur $N_z$ du minorant du nombre de points d'une zone de points en mouvement est appliquée à l'entrée des moyens 4 de détermination d'une première estimation de l'état des points de cette zone. La valeur $N_z$ est comparée à la valeur 0 par le comparateur 47 qui fournit un signal de valeur logique 1 si $N_z$ est supérieure à 0. La valeur $N_z$ est comparée par rapport à la valeur seuil $N_{S2}$ par le comparateur 48 qui fournit sur sa sortie un signal logique de valeur 1 si $N_z$ est supérieure à $N_{S2}$. Ces deux bits constituent le mot binaire de valeur $E^1$ qui est l'état estimé du point correspondant à la valeur de minorant $N_z$ considérée.

Il est à la portée de l'homme de l'art d'adapter cet exemple de réalisation pour mettre en œuvre la deuxième variante du procédé selon l'invention, dans laquelle un état estimé peut avoir quatre valeurs possibles.

## Revendications

1. Procédé de discrimination du bruit et du mouvement dans une séquence d'images vidéo, caractérisé en ce qu'il consiste: à détecter les points d'une image, dits points en mouvement, dont la luminance a varié par rapport à l'image immédiatement précédente à cause d'un mouvement vrai ou à cause du bruit; et en ce qu'il consiste pour chaque point en mouvement:

– à déterminer un minorant $N_z$ du nombre de points d'une zone, constituée de points en mouvement connexes, où est situé le point considéré;

– à faire une première estimation de l'état du point considéré en comparant la valeur $N_z$ par rapport à une valeur $N_{S2}$ fixée ($N_{S2}$ entier positif), l'état du point étant estimé être un mouvement vrai (M), si $N_z > N_{S2}$ et un mouvement dû au bruit (B) si $N_z \leqslant N_{S2}$;

– à faire, pour $j = 2$ à $p - 1$, j et p étant des nombres entiers, et p étant un nombre inférieur ou égal à $N_{S2}$, une $j^{ème}$ estimation de l'état du point considéré en fonction de l'état, estimé précédemment, des points en mouvement connexes au point considéré et appartenant à la même ligne ou à la ligne suivante;

– à faire une $p^{ième}$ estimation de l'état du point considéré en fonction de l'état estimé précédemment de N' points suivant immédiatement le point considéré sur la même ligne, N' étant un nombre entier fixé tel que $N' \geqslant N_{S2} - p$; l'état du point considéré étant estimé être un mouvement vrai s'il a précédemment été estimé mouvement vrai (M) ou s'il y a parmi ces N' points au moins un point en mouvement connexe au point considéré, et s'il y a parmi ces points en mouvement connexes au point considéré au moins un point en mouvement vrai (M); et le point considéré étant estimé être en mouvement dû au bruit (B) dans les autres cas;

– et à discriminer les points du premier type (M) et les points du second type (B) selon le résultat de la dernière estimation réalisée.

2. Procédé selon la revendication 1, caractérisé en ce qu'il consiste en outre, pour chaque point en mouvement, à faire une $(p + 1)^{ième}$ estimation de son état en fonction de l'état précédemment estimé du point homologue du point considéré sur la ligne précédente; l'état du point considéré étant estimé être un mouvement vrai (M) s'il a été précédemment estimé être un mouvement vrai (M), ou si son point homologue sur la ligne précédente est un point en mouvement vrai (M); et l'état du point considéré étant estimé être en mouvement dû au bruit (B) dans les autres cas.

3. Procédé selon la revendication 1, caractérisé en ce que le nombre p est égal à 4 et en ce que le nombre $N_{S2}$ est réglable en fonction de la quantité de bruit affectant la séquence d'images.

4. Procédé selon la revendication 1, caractérisé en ce que la détermination d'un minorant $N_z$ du nombre de points en mouvement contenus dans la zone où est situé le point considéré, consiste à:

– déterminer un premier minorant $N_d$ de ce nombre de points, $N_c$ étant pris égal à:

– C, un minorant du nombre de points en mouvement connexes au point considéré et le suivant sur la même ligne, si le point précédant le point considéré sur la même ligne, et le point homologue du point considéré sur la ligne précédente, ne sont pas en mouvement;

– $N_p$, un premier minorant calculé précédemment pour le point précédant le point considéré sur la même ligne, si le point précédant le point considéré sur la même ligne est en mouvement et le point homologue sur la ligne précédente n'est pas en mouvement, ou si le point précédant le point considéré, le point homologue sur la ligne précédente, et le point précédant ce dernier sont en mouvement;

– $N_a + C$, $N_a$ étant un premier minorant calculé précédemment pour le point homologue du point considéré sur la ligne précédente, si ce point homologue est en mouvement et le point précédant le point considéré sur la même ligne n'est pas en mouvement,

– $N_a + N_p$, si le point homologue du point considéré sur la ligne précédente et le point précédant le point considéré sur la même ligne sont en mouvement et le point précédant le point homologue sur la ligne précédente n'est pas en mouvement;

– à prendre pour minorant $N_z$:

– le premier minorant $N_c$, si le point homologue du point considéré sur la ligne suivante n'est pas en mouvement;

– $N_b$, un premier minorant calculé précédemment pour le point homologue du point considéré sur la ligne suivante, si ce point homologue est en mouvement.

5. Procédé selon la revendication 1, caractérisé en ce que, lors de la $j^{ème}$ estimation de l'état d'un point en mouvement $(2 \leqslant j \leqslant p - 1)$, l'état de ce point est estimé:

– être un mouvement vrai (M) si son état estimé par la $(j - 1)^{ième}$ estimation est un mouvement vrai (M) ou si l'état précédemment estimé

– du point précédent sur la même ligne,

– ou du point suivant sur la même ligne,

– ou du point homologue sur la ligne suivante est un mouvement vrai (M),

ou si l'état précédemment estimé du point suivant le point homologue sur la ligne suivante est un mouvement vrai (M) et l'état précédemment estimé du point suivant le point considéré est un mouvement dû au bruit (B);

– et est estimé être un mouvement dû au bruit (B) dans tous les autres cas.

6. Procédé selon la revendication 1, caractérisé en ce que la première estimation consiste en outre à comparer la valeur $N_z$ par rapport à une valeur $N_{S1}$ fixée ($N_S1$ entier positif inférieur à $N_{S2}$) l'état du point étant estimé être:

– un mouvement très probablement dû au bruit $(B_a)$ si $N_z \leqslant N_{S1}$

– un mouvement peu probablement dû au bruit $(B_2)$ si $N_{S1} < N_z \leqslant N_{S2}$.

7. Procédé selon la revendication 6, caractérisé en ce que, lors de la $j^{ème}$ estimation de l'état d'un point en mouvement ($2 \leqslant j < p-1$), l'état de ce point est estimé:

— être un mouvement vrai (M) si son état estimé par la $(j-1)^{ième}$ estimation est un mouvement vrai (M) ou si l'état précédemment estimé

— du point précédent sur la même ligne,

— ou du point suivant sur la même ligne,

— ou du point homologue sur la ligne suivante est un mouvement vrai (M),

ou si l'état précédemment estimé du point suivant le point homologue sur la ligne suivante est un mouvement vrai (M) et l'état précédemment estimé du point suivant le point considéré sur la même ligne est un mouvement très probablement ou peu probablement dû au bruit ($B_1$ ou $B_2$);

— être un mouvement peu probablement dû au bruit ($B_2$) si son état estimé par la $(j-1)^{ième}$ estimation est un mouvement peu probablement dû au bruit ($B_2$) ou si l'état précédemment estimé

— du point précédent sur la même ligne,

— ou du point suivant sur la même ligne,

— ou du point homologue sur la ligne suivante est un mouvement peu probablement dû au bruit ($B_2$),

ou si l'état précédemment estimé du point suivant le point homologue sur la ligne suivante est un mouvement peu probablement dû au bruit ($B_2$) et l'état précédemment estimé du point suivant le point considéré est un mouvement très probablement dû au bruit ($B_1$);

— être un mouvement très probablment dû au bruit (B1) dans les autres cas;

et en ce que, lors de la $p^{ième}$ estimation, l'état d'un point en mouvement dû au bruit (B) est estimé être un mouvement peu probablement dû au bruit ($B_2$) s'il y a parmi les N' points suivant le point considéré au moins un point en mouvement connexe au point considéré, et il n'y a pas de points en mouvement vrai (M) parmi ces points connexes, et il y a au moins un point en mouvement peu probablement dû au bruit ($B_2$) parmi ces points connexes; et est estimé être un mouvement très probablement dû au bruit ($B_1$) dans les autres cas.

8. Procédé selon les revendications 2 et 7, caractérisé en ce que, lors de la $(p+1)^{ième}$ estimation, l'état d'un point précédemment estimé être en mouvement très probablement dû au bruit ($B_1$) est estimé être un mouvement peu probablement dû au bruit ($B_2$) si le point homologue du point considéré sur la ligne précédente est un point dont le mouvement est peu probablement dû au bruit ($B_2$); et est estimé être un mouvement très probablement dû au bruit ($B_1$) dans les autres cas.

9. Dispositif détecteur de mouvement pour la mise en œuvre du procédé selon la revendication 1, caractérisé en ce qu'il comporte:

— des moyens (2) de détection des points en mouvement, recevant sur une entrée la valeur de la luminance de chaque point d'une image et la comparant par rapport à celle du point homologue dans l'image précédente, et ayant une sortie fournissant un signal logique pour chaque point en mouvement;

— des moyens (3) de calcul d'un minorant, recevant sur une entrée le signal logique fourni par les moyens de détection (2) et fournissant sur une sortie une valeur $N_z$ minorant du nombre de points contenus dans une zone de points connexes en mouvement, où est situé le point considéré;

— des moyens (4) de détermination d'une première estimation de l'état d'un point en mouvement, recevant sur une entrée la valeur $N_z$, la comparant à une valeur fixe $N_{S2}$, et fournissant sur une sortie une valeur de l'état estimé du point considéré;

— des moyens (5 ou 6) de détermination d'une $j^{ième}$ estimation, j variant de 2 à $p-1$, ayant une entrée reliée à la sortie des moyens (4 ou 5) de détermination d'une $(j-1)^{ième}$ estimation et fournissant sur une sortie une valeur de l'état estimé du point considéré; cette valeur étant déterminée en fonction de l'état estimé précédemment des points en mouvement qui sont connexes au point considéré et qui appartiennent à la même ligne ou à la ligne suivante;

— des moyens (7) de détermination d'une $p^{ième}$ estimation de l'état du point considéré, ayant une première entrée reliée à la sortie des moyens (6) de détermination de la $(p-1)^{ième}$ estimation, et ayant une sortie couplée à la sortie du dispositif selon l'invention; cette $p^{ième}$ estimation permettant de conclure sur l'état de mouvement ou de non-mouvement du point considéré à partir de l'état estimé précédemment de N' points suivant immédiatement le point considéré, sur la même ligne, N' étant un nombre entier fixé tel que $N' \geqslant N_{S2} - p$.

10. Dispositif sleon la revendication 9, pour la mise en œuvre du procédé selon la revendication 2, caractérisé en ce qu'il comporte en outre des moyens (8) de détermination d'une $(p+1)^{ième}$ estimation de l'état du point considéré, ayant une entrée reliée à la sortie des moyens (7) de détermination de la $p^{ième}$ estimation et ayant une sortie constituant la sortie du dispositif selon l'invention.

11. Dispositif selon la revendication 9, pour la mise en œuvre du procédé selon la revendication 5, caractérisé en ce que les moyens (3) de détermination d'un minorant comportent:

— des moyens (11) de détermination du nombre de points en mouvement connexes à un point en mouvement considéré, ayant une entrée constituant l'entrée des moyens (3) de détermination d'un minorant et ayant une sortie;

— des moyens (12) de calcul d'un premier minorant, ayant une première entrée reliée à la sortie des moyens (11) de détermination du nombre de points en mouvement connexes, et ayant une deuxième entrée, une troisième entrée et une sortie;

— un dispositif (14) à retard d'une ligne aynat une entrée et une sortie respectivement reliées à la sortie et à la deuxième entrée des moyens (12) de détermination d'un premier minorant;

— un dispositif (13) à retard d'un point, ayant une entrée et une sortie reliées respectivement à la sortie et à la troisième entrée des moyens (12) de calcul d'un premier minorant;

— un dispositif (15) de sélection d'un minorant, ayant une première entrée reliée à la sortie des moyens (12) de calcul d'un premier minorant, une seconde entrée reliée à la sortie du dispositif (14) à retard d'une ligne, et une sortie constituant la sortie des moyens (3) de détermination d'un minorant.

12. Dispositif selon la revendication 9, pour la mise en œuvre du procédé selon la revendication 5, caractérisé en ce que les moyens (5, ou 6) de détermination d'une $j^{ième}$ estimation, $2 \leqslant j \leqslant p-1$, comportent:

– un dispositif (16) à retard d'une ligne ayant une entrée reliée à l'entrée des moyens (5 ou 6) de détermination d'une $j^{ième}$ estimation et ayant une sortie;

– un premier dispositif (17) à retard d'un point ayant une entrée reliée à l'entrée des moyens (5 ou 6) de détermination d'une $j^{ième}$ estimation et ayant une sortie;

– un deuxième dispositif (18) à retard d'un point, ayant une entrée reliée à la sortie du dispositif (16) à retard d'une ligne, et ayant une sortie;

– un troisième dispositif (19) à retard d'un point, ayant une entrée et une sortie,

– une mémoire morte (20) ayant cinq entrées d'adresse reliées respectivement à la sortie du premier dispositif (17) à retard d'un point, à l'entrée des moyens (5) de détermination d'une $j^{ième}$ estimation, à la sortie du deuxième dispositif (18) à retard d'un point, à la sortie du dispositif (16) à retard d'une ligne, et à la sortie du troisième dispositif (19) à retard d'un point, et ayant une sortie constituant la sortie des moyens (5) de détermination d'une $j^{ième}$ estimation et reliée à l'entrée du troisième dispositif (19) à retard d'un point.

13. Dispositif selon la revendication 9, pour la mise en œuvre du procédé selon la revendication 5, caractérisé en ce que les moyens (7) de détermination d'une $p^{ième}$ estimation comportent:

– un registre à décalage (21), à N′ étages, ayant une entrée série constituant l'entrée des moyens (7) de détermination d'une $p^{ième}$ estimation et ayant N′ sorties parallèles;

– une mémoire (22) ayant N′ entrées d'adresse reliées respectivement aux N′ sorties du registre à décalage (21) et ayant une sortie constituant la sortie des moyens (7) de détermination d'une $p^{ième}$ estimation.

14. Dispositif selon la revendication 10, caractérisé en ce que les moyens (8) de détermination d'une $(p+1)^{ième}$ estimation comportant:

– un dispositif (23) à retard d'une ligne ayant une entrée reliée à l'entrée des moyens (8) de détermination d'une $(p+1)^{ième}$ estimation, et ayant une sortie;

– un circuit logique (24) ayant une première entrée reliée à l'entrée des moyens (8) de détermination d'une $(P+1)^{ième}$ estimation, une deuxième entrée reliée à la sortie du dispositif à retard (23), et ayant une sortie constituant la sortie des moyens (8) de détermination d'une $(p+1)^{ième}$ détermination.

## Claims

1. A method for the discrimination of the noise and of the fluctuation in a video image sequence, characterized in that it consists in detecting the points of an image, hereafter referred to as fluctuating points, whose luminance has varied in relation to the immediately preceding image due to a true fluctuation or else due to the noise, and that it consists with regard to each fluctuating point in:

– determining a minorant $N_z$ of the number of points of a zone composed of related fluctuating points, wherein the considered point is located,

– realizing a first assessment of the state of the considered point by comparing the value $N_z$ with a fixed value $N_{S2}$ ($N_{S2}$ being a positive integer), with the state of the point being assessed to be a true fluctuation (M), if $N_z > N_{S2}$ and a fluctuation caused by noise (B), if $N_z \leqslant N_{S2}$,

– realizing a $j^{th}$ assessment of the state of the considered point as a function of the state, assessed before, of the fluctuating points related to the considered point and belonging to the same line or else to the following line, with $j = 2$ to $p-1$, j and p being integers and p being a number smaller than or equal to $N_{S2}$,

– realizing a $p^{th}$ assessment of the state of the considered point as a function of the state assessed before of the N′ points following immediately the considered point on the same line, with N′ being an integer and fixed such that $N' \geqslant N_{S2} - p$, the state of the considered point being assessed to be a true fluctuation, if it has been assessed before to be a true fluctuation (M) or else if there is among the N′ points at least one fluctuating point related to the considered point, and if there is among the fluctuating points related to the considered point at least one point exhibiting a true fluctuation (M), and the considered point being assessed to be subjected to fluctuation caused by noise (B) in all of the other cases,

– and discriminating the points of the first category (M) and the points of the second category (B) in accordance with the result of the latest realized assessment.

2. A method according to claim 1, characterized in that it consists, in addition, with regard to each fluctuating point, in realizing a $(p+1)^{th}$ assessment of its state as a function of the state assessed before of the point homologous to the considered point in the preceding line, the state of the considered point being assessed to be a true fluctuation (M), if it has been assessed before to be a true fluctuation (M), or if its homologous point in the preceding line is a point subjected to a true fluctuation (M), and the considered point being assessed to be subjected to fluctuation caused by noise (B) in all of the other cases.

3. A method according to claim 1, characterized in that the number p is equal to 4, and that the number $N_{S2}$ is controlled as a function of the amount of noise affecting the sequence of images.

4. A method according to claim 1, characterized in that the determination of a minorant $N_z$ of the number of fluctuating points contained within the zone where the considered point is located, consists

– in determining a first minorant $N_c$ of this number of points, with $N_c$ being equal to:

– C, a minorant of the number of fluctuating points which are related to the considered point and to the following one on the same line, if the point preceding the considered point in the same line and the point homologous to the considered point in the preceding line are not subjected to fluctuation,

– $N_p$, a first minorant, previously computed for the point preceding the considered point in the same line, if the point preceding the considered point in the same line is fluctuating and the homologous point in the preceding line is not fluctuating, or else if the point preceding the considered point, the homologous point on the preceding line and the point preceding the latter point are fluctuating,

– $N_a + C$, with $N_a$ being a first minorant, previously computed for the point homologous to the considered point in the preceding line, if the homologous point is fluctuating and the point preceding the considered point in the same line is not fluctuating,

– $N_a + N_p$, if the point homologous to the considered point in the preceding line and the point preceding the considered point in the same line are fluctuating and the point preceding the homologous point in the preceding line is not fluctuating,

– in adopting, as a minorant $N_z$:

– the first minorant Nc, if the point homologous to the considered point in the following line is not fluctuating,

– $N_b$, a first minorant, previously computed for the point homologous to the considered point in the following line, if this homologous point is fluctuating.

5. A method according to claim 1, characterized in that in carrying out the $j^{th}$ assessment of the state of a fluctuating point, with $2 \leqslant j \leqslant p - 1$, the state of this point is assessed to be:

– a true fluctuation (M), if its state assessed in the $(j-1)^{th}$ assessment is a true fluctuation (M) or else if the state, assessed before,

 – of the preceding point on the same line

 – or of the following point on the same line

 – or of the homologous point on the next line is a true fluctuation (M),

or else if the state assessed before of the point following the homologous point in the following line is a true fluctuation (M) and the state assessed before of the point following the considered point is a fluctuation caused by noise (B),

– and is assessed to be a fluctuation caused by noise (B) in all of the other cases.

6. A method according to claim 1, characterized in that the first assessment consists, in addition, in comparing the value $N_z$ with a fixed value $N_{S1}$ ($N_{S1}$ being a positive integer smaller than $N_{S2}$), with the state of the point being assessed to be:

– a fluctuation very possibly due to noise ($B_1$), if $N_z \leqslant N_{S1}$,

– a fluctuation hardly due to noise ($B_2$), if $N_{S1} < N_z \leqslant N_{S2}$.

7. A method according to claim 6, characterized in that in carrying out the $j^{th}$ assessment of the state of a fluctuating point, with $2 \leqslant j < p - 1$, the state of this point is assessed to be:

– a true fluctuation (M), if its state assessed in the $(j-1)^{th}$ assessment is a true fluctuation (M) or else if the state assessed before,

 – of the preceding point on the same line

 – or of the following point on the same line

 – or of the homologous point on the following line is a true fluctuation (M),

or else if the state assessed before of the point following the homologous point in the following line is a true fluctuation (M) and the state assessed before of the point following the considered point in the same line is a fluctuation very probably or hardly due to noise ($B_1$ or $B_2$),

– a fluctuation hardly due to noise ($B_2$), if its state assessed in the $(j-1)^{th}$ assessment is a fluctuation hardly due to noise or else if the state assessed before

 – of the preceding point on the same line

 – or of the following point on the same line

 – or of the homologous point on the following line is a fluctuation hardly due to noise ($B_2$),

or else if the state assessed before of the point following the homologous point in the following line is a fluctuation hardly due to noise ($B_2$) and the state assessed before of the point following the considered point is a fluctuation hardly due to noise ($B_1$),

– a fluctuation very probably due to noise ($B_1$) in the other cases,

and in that, in carrying out the $p^{th}$ assessment, the state of a point fluctuating due to noise (B) is assessed to be a fluctuation hardly caused by noise ($B_2$), if there is among the N' points following the considered point at least one fluctuating point related to the considered point, and if there is no point among these related points which is subjected to true fluctuation (M), and if there is at least one point among these related points which is hardly fluctuating due to noise ($B_2$), and that it is assessed to be a fluctuation very probably caused by noise ($B_1$) in all of the other cases.

8. A method according to claims 2 and 7, characterized in that when carrying out the $(p+1)^{th}$ assessment, the state of a point assessed before to be a fluctuation very probably caused by noise ($B_1$) is assessed to be a fluctuation hardly caused by noise ($B_2$), if the point homologous to the considered point in the preceding line is a point whose fluctuation is hardly caused by noise ($B_2$), and it is assessed to be a fluctuation very probably caused by noise ($B_1$) in the other cases.

9. A fluctuation detecting device arranged for the implementation of the method according to claim 1, characterized in that it comprises:

– means (2) for detecting fluctuation points, adapted to receive on one input the value of the luminance of each point of an image and to compare it with the one of the homologous point in the preceding image, and having an output which supplies a logic signal of each fluctuating point,

– means (3) for computing a minorant, adapted to receive on one input the logic signal delivered by the detection means (2) and to supply on one output a value $N_z$ as being the minorant of the number of points contained in a zone of fluctuating related points, where the considered point is located,

– means (4) for determining the first assessment of the state of a fluctuating point, adapted to receive on one input the value $N_z$, to compare it with a fixed value $N_{S2}$, and to deliver a value of the assessed state of the considered point on an output,

– means (5 or 6) for determining a $j^{th}$ assessment, with j varying from 2 to $p-1$, the means having an input connected to the output of the means (4 or 5) for determining the $(j-1)^{th}$ assessment and adapted to supply on an output a value of the assessed state of the considered point, this value being determined as a function of the state assessed before of the fluctuating points, which are related to the considered point and which belong to the same line or else to the following line,

– means (7) for determining a $p^{th}$ assessment of the state of the considered point, these means having a first input connected to the output of the means (6) for determining the $(p-1)^{th}$ assessment, and having an output coupled to the output of the device in accordance with the invention, this $p^{th}$ assessment allowing to define the state of fluctuation or of non-fluctuation of the considered point in using the state assessed before of the N′ points which, in the same line, follow immediately the considered point, N′ being a fixed integer such that $N' \geqslant N_{S2} - p$.

10. A device according to claim 9, arranged for the implementation of the method according to claim 2, characterized in that it further comprises means (8) for determining a $(p+1)^{th}$ assessment of the state of the considered point, these means having an input connected to the output of the means (7) for determining the $p^{th}$ assessment, and having an output which constitutes the output of the device in accordance with the invention.

11. A device according to claim 9, arranged for the implementation of the method according to claim 5, characterized in that the means (3) for determining a minorant comprise:

– means (11) for determining the number of fluctuating points related to a fluctuating point under consideration, these means having an input which constitutes the input of the means (3) for determining a minorant and having an output,

– means (12) for computing a first minorant, having a first input connected to the output of the means (11) for determining the number of fluctuating related points, and having a second input, a third input and an output,

– a device (14) for delaying by one line having an input and an output respectively connected to the output and to the second input of the means (12) for determining a first minorant,

– a device (13) for delaying by one point, having an input and an output respectively connected to the output and to the third input of the means (12) for computing a first minorant,

– a device (15) for selecting a minorant, having a first input connected to the output of the means (12) for computing a first minorant, a second input connected to the output of the device (14) for delaying by one line, and an output which constitutes the output of the means (3) for determining a minorant.

12. A device according to claim 9, arranged for the implementation of the method according to claim 5, characterized in that the means (5 or 6) for determining a $j^{th}$ assessment, with $2 \leqslant j \leqslant p-1$, comprise:

– a device (16) for delaying by one line, having an input connected to the input of the means (5 or 6) for determining a $j^{th}$ assessment, and having an output,

– a first device (17) for delaying by one point, having an input connected to the input of the means (5 or 6) for determining a $j^{th}$ assessment, and having an output,

– a second device (18) for delaying by one point, having an input connected to the output of the device (16) for delaying by one line, and having an output,

– a third device (19) for delaying by one point, having an input and an output,

– a read-only memory (20) having five address inputs connected respectively to the output of the first device (17) for delaying by one point, to the input of the means (5) for determining a $j^{th}$ assessment, to the output of the second device (18) for delaying by one point, to the output of the device (16) for delaying by one line, and to the output of the third device (19) for delaying by one point, and having an output, which constitutes the output of the means (5) for determining a $j^{th}$ assessment and is connected to the input of the third device (19) for delaying by one point.

13. A device according to claim 9, arranged for the implementation of the method according to claim 5, characterized in that the means (7) for determining a $p^{th}$ assessment comprise:

– a N′ stage shift register (21) having a serial input, which constitutes the input of the means (7) for determining a $p^{th}$ assessment, and having N′ parallel outputs,

– a memory (22) having N′ address inputs connected respectively to the N′ outputs of the shift register (21) and having an output, which constitutes the output of the means (17) for determining a $p^{th}$ assessment.

14. A device according to claim 10, characterized in that the means (8) for determining a $p^{th}$ assessment comprise:

– a device (23) for delaying by one line having an input connected to the input of the means (8) for determining a $(p+1)^{th}$ assessment, and having an output,

– a logic circuit (24) having a first input connected to an input of the means (8) for determining a $(p+1)^{th}$ assessment, a second input connected to the output of the delay device (23), and having an output which constitutes the output of the means (8) for determining a $(p+1)^{th}$ assessment.

**Patentansprüche**

1. Verfahren zur Diskriminierung des Rauschens und der Schwankung in einer Videobildfolge, dadurch gekennzeichnet, daß es in der Erfassung derjenigen Bildpunkte, genannt «schwankende Punkte», besteht, deren Leuchtkraft sich im Vergleich zum unmittelbar vorhergehenden Bild infolge einer tatsächlichen Schwankung oder infolge des Rauschens verändert hat, und dass es für jeden schwankenden Punkt darin besteht, daß:

– eine Minorante $N_z$ der Anzahl der Punkte einer Zone, bestehend aus zusammenhängenden schwankenden Punkten, bestimmt wird, worin sich der betrachtete Punkt befindet,

– eine erste Schätzung des Zustands des betrachteten Punkts durch Vergleichen der Größe $N_z$ mit einer festgesetzten Größe $N_{S2}$ ($N_{S2}$ ist eine ganze positive Zahl) erfolgt, wobei der Zustand des Punkts als eine echte Schwankung (M) angesehen wird, wenn $N_z > N_{S2}$, und als eine durch Rauschen verursachte Schwankung (B), wenn $N_z \leqslant N_{S2}$ ist,

– eine j-te Schätzung des Zustands des betrachteten Punkts, für $j=2$ bis $p-1$, wobei j und p ganzzahlig und p kleiner oder gleich $N_{S2}$ ist, in Abhängigkeit vom vorher geschätzten Zustand der mit dem betrachteten Punkt zusammenhängenden und zur gleichen oder der folgenden Zeile gehörenden schwankenden Punkte erfolgt,

– eine p-te Schätzung des Zustands des betrachteten Punkts in Abhängigkeit vom vorher geschätzten Zustand der N' unmittelbar dem betrachteten Punkt auf der gleichen Zeile folgenden Punkte erfolgt, wobei N' ganzzahlig und so festgelegt ist, daß $N' \geqslant N_{S2}-p$, und wobei der Zustand des betrachteten Punkts als eine echte Schwankung angesehen wird, wenn er vorher als echte Schwankung (M) geschätzt wurde oder wenn es unter den N' Punkten mindestens einen mit dem betrachteten Punkt zusammenhängenden schwankenden Punkt gibt, und wenn es unter den mit dem betrachteten Punkt zusammenhängend schwankenden Punkten mindestens einen echt schwankenden Punkt (M) gibt, und wobei in den anderen Fällen der betrachtete Punkt als in einer durch Rauschen verursachten Schwankung befindlich geschätzt wird,

– und daß eine Diskriminierung der Punkte des ersten Typs (M) und der Punkte des zweiten Typs (B) in Abhängigkeit vom Ergebnis der zuletzt durchgeführten Schätzung erfolgt.

2. Verfahren nach Anspruch 1, dadurch gekennzeichnet, daß es weiter darin besteht, daß für jeden schwankenden Punkt eine (p+1)-te Schätzung seines Zustands in Abhängigkeit vom vorher geschätzten Zustand des zum betrachteten Punkt homologen Punkts der vorhergehenden Linie erfolgt, wobei der Zustand des betrachteten Punkts als eine echte Schwankung (M) angesehen wird, wenn er vorher als eine echte Schwankung (M) geschätzt wurde oder wenn sein homologer Punkt auf der vorhergehenden Zeile ein echt schwankender Punkt (M) ist, und wobei in den anderen Fällen der Zustand des betrachteten Punkts als eine durch Rauschen verursachte Schwankung (B) angesehen wird.

3. Verfahren nach Anspruch 1, dadurch gekennzeichnet, daß die Zahl p gleich 4 ist und die Anzahl $N_{S2}$ in Abhängigkeit von dem die Bildfolge beeinträchtigenden Ausmaß des Rauschens festlegbar ist.

4. Verfahren nach Anspruch 1, dadurch gekennzeichnet, daß die Bestimmung einer Minorante $N_z$ der Anzahl der in der Zone, in welcher sich der betrachtete Punkt befindet, enthaltenen schwankenden Punkte in der Weise erfolgt, daß

– eine erste Minorante $N_c$ dieser Anzahl von Punkten bestimmt wird, wobei $N_c$ gleichgesetzt wird mit:

– C, einer Minorante der Anzahl der mit dem betrachteten und dem folgenden Punkt der gleichen Zeile zusammenhängenden schwankenden Punkten, sofern der dem betrachteten Punkt auf der gleichen Zeile vorausgehende Punkt sowie der zum betrachteten Punkt homologe Punkt auf der vorhergehenden Zeile nicht schwanken,

– $N_p$, einer ersten, vorher für den dem betrachteten Punkt derselben Zeile vorausgehenden Punkt berechneten Minorante, sofern der dem betrachteten Punkt auf der gleichen Zeile vorausgehende Punkt schwankt und der homologe Punkt auf der vorhergehenden Zeile nicht schwankt, oder sofern der dem betrachteten Punkt vorausgehende Punkt, der homologe Punkt auf der vorhergehenden Zeile und der dem letzteren vorausgehende Punkt schwanken,

– $N_a + C$, wobei $N_a$ eine erste, vorher für den zum betrachteten Punkt homologen Punkt der vorhergehenden Zeile berechnete Minorante ist, sofern dieser homologe Punkt schwankt und der dem betrachteten Punkt vorausgehende Punkt derselben Zeile nicht schwankt,

– $N_a + N_p$, sofern der zum betrachteten Punkt auf der vorhergehenden Zeile homologe Punkt und der dem betrachteten Punkt auf derselben Zeile vorausgehende Punkt schwanken und der dem homologen Punkt der vorhergehenden Zeile vorausgehende Punkt nicht schwankt,

– als Minorante $N_z$ die

– erste Minorante Nc genommen wird, falls der zum betrachteten Punkt homologe Punkt auf der nachfolgenden Zeile nicht schwankt,

– $N_b$ genommen wird, die eine vorher für den zum betrachteten Punkt homologen Punkt der nachfolgenden Zeile berechnete erste Minorante ist, falls dieser homologe Punkt schwankt.

5. Verfahren nach Anspruch 1, dadurch gekennzeichnet, daß bei der j-ten Schätzung des Zustands eines schwankenden Punkts, mit $2 \leqslant j \leqslant p-1$, der Zustand dieses Punkts geschätzt wird

– als in echter Schwankung (M) begriffen, falls sein durch die (j−1)-te Schätzung definierter Zustand eine echte Schwankung (M) ist oder falls der zuvor geschätzte Zustand

– des vorhergehenden Punkts auf derselben Zeile,

– oder des nachfolgenden Punkts auf derselben Zeile,

– oder des homologen Punkts auf der nachfolgenden Zeile eine echte Schwankung (M) ist, oder falls der zuvor geschätzte Zustand des auf den homologen Punkt auf der nächstfolgenden Zeile folgenden Punkts eine echte Schwankung (M) und der zuvor geschätzte Zustand des auf den betrachteten Punkt folgenden Punkts ein durch Rauschen verursachter Schwankungszustand (B) ist,

– und in allen anderen Fällen als ein durch Rauschen (B) verursachter Zustand.

6. Verfahren nach Anspruch 1, dadurch gekennzeichnet, daß die erste Schätzung weiter im Vergleichen der Größe $N_z$ mit einem festgesetzten Wert $N_{S1}$ besteht ($N_{S1}$ ist eine positive ganze Zahl kleiner als $N_{S2}$), wobei der Zustand des geschätzten Punkts angesehen wird

– als eine mit hoher Wahrscheinlichkeit auf Rauschen ($B_1$) beruhende Schwankung, falls $N_z \leqslant N_{S1}$ ist, oder

– als eine mit geringer Wahrscheinlichkeit auf Rauschen ($B_2$) beruhenden Schwankung, falls $N_{S1} < N_z \leqslant N_{S2}$ ist.

7. Verfahren nach Anspruch 6, dadurch gekennzeichnet, daß bei der j-ten Schätzung des Zustands eines schwankenden Punkts, mit $2 \leqslant j < p-1$ der Zustand angesehen wird als

– eine echte Schwankung (M), falls sein durch die (j−1)-te Schätzung definierter Zustand eine echte Schwankung (M) ist oder falls der zuvor geschätzte Zustand

– des vorangehenden Punkts auf derselben Zeile,

– oder des nachfolgenden Punkts auf derselben Zeile,

– oder des homologen Punkts auf der nachfolgenden Zeile eine echte Schwankung (M) ist, oder falls der zuvor geschätzte Zustand des auf den homologen Punkt folgenden Punkts auf der nächsten Zeile eine echte Schwankung (M) und der zuvor geschätzte Zustand des auf den betrachteten Punkt folgenden Punkts auf derselben Zeile ein mit hoher oder geringer Wahrscheinlichkeit auf Rauschen ($B_1$ oder $B_2$) beruhender Zustand ist,

– eine wenig wahrscheinlich auf Rauschen ($B_2$) beruhende Schwankung, falls sein durch die (j−1)-te Schätzung definierter Zustand ein mit geringer Wahrscheinlichkeit auf Rauschen ($B_2$) beruhender Zustand ist oder falls der zuvor geschätzte Zustand

– des vorangehenden Punkts auf derselben Zeile,

– oder des nachfolgenden Punkts auf derselben Zeile,

– oder des homologen Punkts auf der nachfolgenden Zeile mit geringer Wahrscheinlichkeit auf einer Schwankung infolge Rauschens ($B_2$) beruht, oder falls der zuvor geschätzte Zustand des auf den homologen Punkt der nachfolgenden Zeile folgenden Punkts mit geringer Wahrscheinlichkeit auf einer Schwankung infolge Rauschens ($B_2$) beruht und der zuvor geschätzte Zustand des auf den betrachteten Punkt folgenden Punkts eine sehr wahrscheinlich auf Rauschen ($B_1$) beruhende Schwankung ist,

– in allen anderen Fällen eine sehr wahrscheinlich auf Rauschen ($B_1$) beruhende Schwankung, und daß bei der p-ten Schätzung der Zustand eines infolge Rauschens (B) schwankenden Punktes als eine Schwankung angesehen wird, die mit geringer Wahrscheinlichkeit auf Rauschen ($B_2$) beruht, falls es unter den N' auf den betrachteten Punkt folgenden Punkten mindestens einen Punkt gibt, der in zusammenhängender Schwankung mit dem betrachteten Punkt steht und es unter diesen zusammenhängenden Punkten keine in echter Schwankung (M) befindlichen Punkte gibt, und es unter diesen zusammenhängenden Punkten mindestens einen mit geringer Wahrscheinlichkeit durch Rauschen ($B_2$) in Schwankung versetzten Punkt gibt, und daß der Zustand in allen anderen Fällen als ein sehr wahrscheinlich auf Rauschen ($B_1$) beruhender Zustand angesehen wird.

8. Verfahren nach den Ansprüchen 2 und 7, dadurch gekennzeichnet, daß bei der (p+1)-ten Schätzung der Zustand eines zuvor als sehr wahrscheinlich durch Rauschen ($B_1$) in Schwankung versetzt angesehenen Punktes geschätzt wird als eine mit geringer Wahrscheinlichkeit auf Rauschen ($B_2$) beruhende Schwankung, falls der zum betrachteten Punkt homologe Punkt auf der vorhergehenden Zeile ein Punkt ist, dessen Schwankung mit geringer Wahrscheinlichkeit auf Rauschen ($B_2$) beruht, und daß in allen anderen Fällen der Zustand als ein sehr wahrscheinlich auf Rauschen ($B_1$) beruhender Zustand angesehen wird.

9. Schwankungsdetektorvorrichtung zur Durchführung des Verfahrens nach Anspruch 1, dadurch gekennzeichnet, daß sie folgende Mittel aufweist:

– Mittel (2) zur Erfassung der schwankenden Punkte, die an einem Eingang den Leuchtkraftwert jedes Punkts eines Bildes empfangen und ihn mit dem Wert des homologen Punkts im vorhergehenden Bild vergleichen, und die einen Ausgang besitzen, der zu jedem schwankenden Punkt ein logisches Signal liefert,

– Mittel (3) zur Berechnung einer Minorante, die an einem Eingang das von den Erfassungsmitteln (2) gelieferte logische Signal empfangen und an einem Ausgang einen Minorantenwert $N_z$ der Anzahl der in einer Zone enthaltenen zusammenhängenden, schwankenden Punkte liefert, in welcher sich der betrachtete Punkt befindet,

– Mittel (4) zur Bestimmung einer ersten Schätzung des Zustands eines schwankenden Punkts, die an einem Eingang den Wert $N_z$ empfangen, ihn mit einem Festwert $N_{S2}$ vergleichen und an einem Ausgang einen Wert des geschätzten Zustands des betrachteten Punkts liefern,

– Mittel (5 oder 6) zur Bestimmung einer j-ten Schätzung, wobei j zwischen 2 und p−1 variiert und die Mittel einen an den Ausgang der Mittel (4 oder 5) zur Bestimmung einer (j−1)-ten Schätzung angeschlossenen Eingang besitzen und an einem Ausgang einen Wert des geschätzten Zustands des betrachteten Punkts liefern, wobei dieser Wert in Abhängigkeit vom zuvor geschätzten Zustand der schwankenden Punkte bestimmt wird, die mit dem betrachteten Punkt zusammenhängen und derselben oder der nachfolgenden Zeile angehören,

– Mittel (7) zur Bestimmung einer p-ten Schätzung des Zustands des betrachteten Punkts, mit einem ersten an den Ausgang der Mittel (6) zur Bestimmung der (p-1)-ten Schätzung angeschlossenen Eingang und mit einem an den Ausgang der Vorrichtung gemäß der Erfindung angeschlossenen Ausgang, wobei diese p-te Schätzung aus dem zuvor geschätzten Zustand der N' Punkte, welche unmittelbar dem betrachteten Punkt auf der gleichen Zeile folgen, auf den Schwankungs- oder Nichtschwankungszustand des betrachteten Punktes zu schließen erlaubt, wobei N' eine ganze Zahl ist, derart, daß $N' \geqslant N_{S2} - P$ ist.

10. Vorrichtung nach Anspruch 9 zur Durchführung des Verfahrens nach Anspruch 2, dadurch gekennzeichnet, daß sie weiter Mittel (8) zur Bestimmung der (p+1)-ten Schätzung des Zustands des betrachteten Punkts aufweist, mit einem an den Ausgang der Mittel (7) zur Bestimmung der p-ten Schätzung angeschlossenen Eingang und einem den Ausgang der Vorrichtung gemäß der Erfindung bildenden Ausgang.

11. Vorrichtung nach Anspruch 9 zur Durchführung des Verfahrens nach Anspruch 5, dadurch gekennzeichnet, daß die Mittel (3) zur Bestimmung einer Minoranten aufweisen

– Mittel (11) zur Bestimmung der Anzahl der mit einem betrachteten schwankenden Punkt zusammenhängenden schwankenden Punkte, mit einem Eingang, der den Eingang der Mittel (3) zur Bestimmung einer Minoranten bildet, und mit einem Ausgang,

– Mittel (12) zur Berechnung einer ersten Minoranten, mit einem ersten Eingang, der mit dem Ausgang der Mittel (11) zur Bestimmung der Anzahl der zusammenhängenden schwankenden Punkte verbunden ist, und mit einem zweiten Eingang, einem dritten Eingang und einem Ausgang,

– eine Vorrichtung (14) zur Verzögerung um eine Zeile, mit einem Eingang und einem Ausgang, die mit dem Ausgang bzw. dem zweiten Eingang der Mittel (12) zur Bestimmung einer ersten Minoranten verbunden sind,

– eine Vorrichtung (13) zur Verzögerung um einen Punkt, mit einem Eingang und einem Ausgang, die an den Ausgang bzw. den dritten Eingang der Mittel (12) zur Berechnung einer ersten Minoranten angeschlossen sind,

– eine Vorrichtung (15) zur Wahl einer Minoranten, mit einem ersten Eingang, der mit dem Ausgang der Mittel (12) zur Berechnung einer ersten Minoranten verbunden ist, einem zweiten Eingang, der mit dem Ausgang der Vorrichtung (14) zur Verzögerung um eine Zeile verbunden ist, und mit einem Ausgang, der den Ausgang der Mittel (3) zur Bestimmung einer Minoranten bildet.

12. Vorrichtung nach Anspruch 9 zur Durchführung des Verfahrens nach Anspruch 5, dadurch gekennzeichnet, daß die Mittel (5 oder 6) zur Bestimmung einer j-ten Schätzung, wobei $2 \leqslant j \leqslant p - 1$ ist, aufweisen

– eine Vorrichtung (16) zur Verzögerung um eine Zeile, mit einem Eingang, der mit dem eingang der Mittel (5 oder 6) zur Bestimmung einer j-ten Schätzung verbunden ist, und mit einem Ausgang,

– eine erste Vorrichtung (17) zur Verzögerung um einen Punkt, mit einem Eingang, der mit dem Eingang der Mittel (5 oder 6) zur Bestimmung einer j-ten Schätzung verbunden ist, und mit einem Ausgang,

– eine zweite Vorrichtung (18) zur Verzögerung um einen Punkt, mit einem Eingang, der an den Ausgang der Einrichtung (16) zur Verzögerung um eine Zeile verbunden ist, und mit einem Ausgang,

– eine dritte Vorrichtung (19) zur Verzögerung um einen Punkt, mit einem Eingang und mit einem Ausgang,

– einen Festspeicher (20) mit fünf Adresseneingängen, die an den Ausgang der ersten Vorrichtung (17) zur Verzögerung um einen Punkt bzw. an den Eingang der Mittel (5) zur Bestimmung einer j-ten Schätzung, bzw. an den Ausgang der zweiten Vorrichtung (18) zur Verzögerung um einen Punkt, bzw. an den Ausgang der Vorrichtung (16) zur Verzögerung um eine Zeile, bzw. an den Ausgang der dritten Vorrichtung (19) zur Verzögerung um einen Punkt angeschlossen sind, und mit einem Ausgang, der den Ausgang der Mittel (5) zur Bestimmung der j-ten Schätzung bildet und an den Eingang der dritten Vorrichtung (19) zur Verzögerung um einen Punkt angeschlossen ist.

13. Vorrichtung nach Anspruch 9 zur Durchführung des Verfahrens nach Anspruch 5, dadurch gekennzeichnet, daß die Mittel (7) zur Bestimmung einer p-ten Schätzung aufweisen

– ein Schieberegister (21) mit N' Stufen und mit einem Serieneingang, der den Eingang der Mittel (7) zur Bestimmung einer p-ten Schätzung bildet, und mit N' parallelen Ausgängen,

– einen Speicher (22) mit N' Adresseneingängen, die mit den N' Ausgängen des Schieberegisters (21) verbunden sind, und mit einem Ausgang, der den Ausgang der Mittel (7) zur Bestimmung einer p-ten Schätzung bildet.

14. Vorrichtung nach Anspruch 10, dadurch gekennzeichnet, daß die Mittel (8) zur Bestimmung einer (p+1)-ten Schätzung aufweisen:

– eine Vorrichtung (23) zur Verzögerung um eine Zeile, mit einem Eingang, der an den Eingang der Mittel (8) zur Bestimmung einer (p+1)-ten Schätzung angeschlossen ist, und mit einem Ausgang,

– einen Logikkreis (24), mit einem ersten Eingang, der an den Eingang der Mittel (8) zur Bestimmung einer (p+1)-ten Schätzung angeschlossen ist, einem zweiten Eingang, der an den Ausgang der Verzögerungsvorrichtung (23) angeschlossen ist, und einem Ausgang, der den Ausgang der Mittel (8) zur Bestimmung einer (p+1)-ten Schätzung bildet.

**Fig.1**

| | 1 | 2 | 3 | 4 | 5 | 6 | 7 | 8 | 9 | 10 | 11 | 12 | 13 | 14 | 15 | 16 | 17 | 18 | 19 | 20 | 21 |
|---|---|---|---|---|---|---|---|---|---|---|---|---|---|---|---|---|---|---|---|---|---|
| 1 | 0 | 0 | 0 | 0 | 0 | 0 | 0 | 0 | 0 | 0 | 0 | 0 | 0 | 0 | 0 | 0 | 0 | 0 | 0 | 0 | 0 |
| 2 | 0 | 0 | 1 | 0 | 0 | 0 | 1 | 1 | 1 | 1 | 0 | 0 | 1 | 1 | 1 | 1 | 0 | 0 | 1 | 1 | 0 |
| 3 | 0 | 0 | 1 | 0 | 0 | 0 | 1 | 0 | 0 | 1 | 0 | 0 | 0 | 1 | 0 | 0 | 0 | 0 | 0 | 1 | 0 |
| 4 | 0 | 0 | 1 | 0 | 0 | 0 | 1 | 0 | 0 | 1 | 1 | 1 | 1 | 1 | 1 | 1 | 0 | 1 | 1 | 1 | 0 |
| 5 | 0 | 1 | 1 | 1 | 1 | 0 | 0 | 0 | 0 | 1 | 0 | 0 | 1 | 0 | 0 | 1 | 0 | 0 | 0 | 0 | 0 |
| 6 | 0 | 1 | 0 | 1 | 1 | 1 | 1 | 1 | 1 | 1 | 0 | 0 | 1 | 0 | 0 | 0 | 0 | 1 | 1 | 1 | 0 |
| 7 | 0 | 0 | 0 | 0 | 0 | 0 | 0 | 0 | 0 | 0 | 0 | 0 | 0 | 0 | 0 | 0 | 0 | 0 | 0 | 0 | 0 |

**Fig.2**

Nc

| | 1 | 2 | 3 | 4 | 5 | 6 | 7 | 8 | 9 | 10 | 11 | 12 | 13 | 14 | 15 | 16 | 17 | 18 | 19 | 20 | 21 |
|---|---|---|---|---|---|---|---|---|---|---|---|---|---|---|---|---|---|---|---|---|---|
| 1 | 0 | 0 | 0 | 0 | 0 | 0 | 0 | 0 | 0 | 0 | 0 | 0 | 0 | 0 | 0 | 0 | 0 | 0 | 0 | 0 | 0 |
| 2 | 0 | 0 | 1 | 0 | 0 | 0 | 4 | 4 | 4 | 4 | 0 | 0 | 4 | 4 | 4 | 4 | 0 | 0 | 2 | 2 | 0 |
| 3 | 0 | 0 | 2 | 0 | 0 | 0 | 5 | 0 | 0 | 5 | 0 | 0 | 0 | 5 | 0 | 0 | 0 | 0 | 0 | 3 | 0 |
| 4 | 0 | 0 | 3 | 0 | 0 | 0 | 6 | 0 | 0 | 12 | 12 | 12 | 12 | 15 | 15 | 15 | 0 | 3 | 3 | 6 | 0 |
| 5 | 0 | 4 | 7 | 7 | 7 | 0 | 0 | 0 | 0 | 13 | 0 | 0 | 13 | 0 | 0 | 15 | 0 | 0 | 0 | 0 | 0 |
| 6 | 0 | 5 | 0 | 14 | 14 | 14 | 14 | 14 | 14 | 15 | 0 | 0 | 14 | 0 | 0 | 0 | 0 | 3 | 3 | 3 | 0 |
| 7 | 0 | 0 | 0 | 0 | 0 | 0 | 0 | 0 | 0 | 0 | 0 | 0 | 0 | 0 | 0 | 0 | 0 | 0 | 0 | 0 | 0 |

**Fig.3**

Nz

| | 1 | 2 | 3 | 4 | 5 | 6 | 7 | 8 | 9 | 10 | 11 | 12 | 13 | 14 | 15 | 16 | 17 | 18 | 19 | 20 | 21 |
|---|---|---|---|---|---|---|---|---|---|---|---|---|---|---|---|---|---|---|---|---|---|
| 1 | 0 | 0 | 0 | 0 | 0 | 0 | 0 | 0 | 0 | 0 | 0 | 0 | 0 | 0 | 0 | 0 | 0 | 0 | 0 | 0 | 0 |
| 2 | 0 | 0 | 2 | 0 | 0 | 0 | 5 | 4 | 4 | 5 | 0 | 0 | 4 | 5 | 4 | 4 | 0 | 0 | 2 | 3 | 0 |
| 3 | 0 | 0 | 3 | 0 | 0 | 0 | 6 | 0 | 0 | 12 | 0 | 0 | 0 | 15 | 0 | 0 | 0 | 0 | 0 | 3 | 0 |
| 4 | 0 | 0 | 7 | 0 | 0 | 0 | 6 | 0 | 0 | 13 | 12 | 12 | 12 | 15 | 15 | 15 | 0 | 3 | 3 | 6 | 0 |
| 5 | 0 | 5 | 7 | 14 | 14 | 0 | 0 | 0 | 0 | 15 | 0 | 0 | 13 | 0 | 0 | 15 | 0 | 0 | 0 | 0 | 0 |
| 6 | 0 | 5 | 0 | 14 | 14 | 14 | 14 | 14 | 14 | 15 | 0 | 0 | 14 | 0 | 0 | 0 | 0 | 3 | 3 | 3 | 0 |
| 7 | 0 | 0 | 0 | 0 | 0 | 0 | 0 | 0 | 0 | 0 | 0 | 0 | 0 | 0 | 0 | 0 | 0 | 0 | 0 | 0 | 0 |

|   | 1 | 2 | 3 | 4 | 5 | 6 | 7 | 8 | 9 | 10 | 11 | 12 | 13 | 14 | 15 | 16 | 17 | 18 | 19 | 20 | 21 |
|---|---|---|---|---|---|---|---|---|---|----|----|----|----|----|----|----|----|----|----|----|----|
| 1 | F | F | F | F | F | F | F | F | F | F | F | F | F | F | F | F | F | F | F | F | F |

Fig.4

|   | 1 | 2 | 3 | 4 | 5 | 6 | 7 | 8 | 9 | 10 | 11 | 12 | 13 | 14 | 15 | 16 | 17 | 18 | 19 | 20 | 21 |
|---|---|---|---|---|---|---|---|---|---|----|----|----|----|----|----|----|----|----|----|----|----|
| 1 | F | F | F | F | F | F | F | F | F | F | F | F | F | F | F | F | F | F | F | F | F |
| 2 | F | F | B | F | F | F | B | B | B | B | F | F | B | B | B | B | F | F | B | B | F |

Fig.5

|   | 1 | 2 | 3 | 4 | 5 | 6 | 7 | 8 | 9 | 10 | 11 | 12 | 13 | 14 | 15 | 16 | 17 | 18 | 19 | 20 | 21 |
|---|---|---|---|---|---|---|---|---|---|----|----|----|----|----|----|----|----|----|----|----|----|
| 1 | F | F | F | F | F | F | F | F | F | F | F | F | F | F | F | F | F | F | F | F | F |
| 2 | F | F | B | F | F | F | B | B | M | M | F | F | M | M | M | M | F | F | B | B | F |
| 3 | F | F | B | F | F | F | B | F | F | M | F | F | M | F | F | F | F | F | B | F | |

Fig.6

Fig.7

```
      1  2  3  4  5  6  7  8  9 10 11 12 13 14 15 16 17 18 19 20 21
 1 | F  F  F  F  F  F  F  F  F  F  F  F  F  F  F  F  F  F  F  F  F
 2 | F  F  M  F  F  F  B  M← M  M  F  F  M  M  M  M  F  F  B  B  F
 3 | F  F  M  F  F  F  B  F  F  M  F  F  F  M  F  F  F  F  F  B  F
 4 | F  F  M  F  F  F  B  F  F  M  M  M  M  M  M  M  F  B  B  B  F
```

Fig.8

```
      1  2  3  4  5  6  7  8  9 10 11 12 13 14 15 16 17 18 19 20 21
 1 | F  F  F  F  F  F  F  F  F  F  F  F  F  F  F  F  F  F  F  F  F
 2 | F  F  M  F  F  F  M← M  M  M  F  F  M  M  M  M  F  F  B  B  F
 3 | F  F  M  F  F  F  B  F  F  M  F  F  F  M  F  F  F  F  F  B  F
 4 | F  F  M  F  F  F  B  F  F  M  M  M  M  M  M  M  F  B  B  B  F
 5 | F  B  M  M  M  F  F  F  F  M  F  F  M  F  F  M  F  F  F  F  F
```

Fig.9

```
      1  2  3  4  5  6  7  8  9 10 11 12 13 14 15 16 17 18 19 20 21
 1 | F  F  F  F  F  F  F  F  F  F  F  F  F  F  F  F  F  F  F  F  F
 2 | F  F  M  F  F  F  M  M  M  M  F  F  M  M  M  M  F  F  B  B  F
 3 | F  F  M  F  F  F  B  F  F  M  F  F  F  M  F  F  F  F  F  B  F
 4 | F  F  M  F  F  F  B  F  F  M  M  M  M  M  M  M  F  B  B  B  F
 5 | F  M← M  M  M  F  F  F  F  M  F  F  M  F  F  M  F  F  F  F  F
 6 | F  B  F  M  M  M  M  M  M  M  F  F  M  F  F  F  F  B  B  B  F
```

Fig.10

```
      1  2  3  4  5  6  7  8  9 10 11 12 13 14 15 16 17 18 19 20 21
 1 | F  F  F  F  F  F  F  F  F  F  F  F  F  F  F  F  F  F  F  F  F
 2 | F  F  M  F  F  F  M  M  M  M  F  F  M  M  M  M  F  F  B  B  F
 3 | F  F  M  F  F  F  M  F  F  M  F  F  F  M  F  F  F  F  F  B  F
 4 | F  F  M  F  F  F  M  F  F  M  M  M  M  M  M  M  F  B  B  B  F
 5 | F  M  M  M  M  F  F  F  F  M  F  F  M  F  F  M  F  F  F  F  F
 6 | F  M  F  M  M  M  M  M  M  M  F  F  M  F  F  F  F  B  B  B  F
 7 | F  F  F  F  F  F  F  F  F  F  F  F  F  F  F  F  F  F  F  F  F
```

**Fig.11**

|   | 1 | 2 | 3 | 4 | 5 | 6 | 7 | 8 | 9 | 10 | 11 | 12 | 13 | 14 | 15 | 16 | 17 | 18 | 19 | 20 | 21 |
|---|---|---|---|---|---|---|---|---|---|----|----|----|----|----|----|----|----|----|----|----|----|
| 1 | F | F | F | F | F | F | F | F | F | F | F | F | F | F | F | F | F | F | F | F | F |

**Fig.12**

|   | 1 | 2 | 3 | 4 | 5 | 6 | 7 | 8 | 9 | 10 | 11 | 12 | 13 | 14 | 15 | 16 | 17 | 18 | 19 | 20 | 21 |
|---|---|---|---|---|---|---|---|---|---|----|----|----|----|----|----|----|----|----|----|----|----|
| 1 | F | F | F | F | F | F | F | F | F | F | F | F | F | F | F | F | F | F | F | F | F |
| 2 | F | F | $B_1$ | F | F | F | $B_2$ | $B_2$ | $B_2$ | $B_2$ | F | F | $B_2$ | $B_2$ | $B_2$ | $B_2$ | F | F | $B_1$ | $B_1$ | F |

**Fig.13**

|   | 1 | 2 | 3 | 4 | 5 | 6 | 7 | 8 | 9 | 10 | 11 | 12 | 13 | 14 | 15 | 16 | 17 | 18 | 19 | 20 | 21 |
|---|---|---|---|---|---|---|---|---|---|----|----|----|----|----|----|----|----|----|----|----|----|
| 1 | F | F | F | F | F | F | F | F | F | F | F | F | F | F | F | F | F | F | F | F | F |
| 2 | F | F | $B_1$ | F | F | F | $B_2$ | $B_2$ | M | M | F | F | M | M | M | M | F | F | $B_1$ | $B_1$ | F |
| 3 | F | F | $B_1$ | F | F | F | $B_2$ | F | F | M | F | F | F | M | F | F | F | F | F | $B_1$ | F |

**Fig.14**

|   | 1 | 2 | 3 | 4 | 5 | 6 | 7 | 8 | 9 | 10 | 11 | 12 | 13 | 14 | 15 | 16 | 17 | 18 | 19 | 20 | 21 |
|---|---|---|---|---|---|---|---|---|---|----|----|----|----|----|----|----|----|----|----|----|----|
| 1 | F | F | F | F | F | F | F | F | F | F | F | F | F | F | F | F | F | F | F | F | F |
| 2 | F | F | M | F | F | F | $B_2$ | M | M | M | F | F | M | M | M | M | F | F | $B_2$ | $B_2$ | F |
| 3 | F | F | M | F | F | F | $B_2$ | F | F | M | F | F | F | M | F | F | F | F | F | $B_2$ | F |
| 4 | F | F | M | F | F | F | $B_2$ | F | F | M | M | M | M | M | M | M | F | $B_1$ | $B_1$ | $B_2$ | F |

**Fig.15**

|   | 1 | 2 | 3 | 4 | 5 | 6 | 7 | 8 | 9 | 10 | 11 | 12 | 13 | 14 | 15 | 16 | 17 | 18 | 19 | 20 | 21 |
|---|---|---|---|---|---|---|---|---|---|----|----|----|----|----|----|----|----|----|----|----|----|
| 1 | F | F | F | F | F | F | F | F | F | F | F | F | F | F | F | F | F | F | F | F | F |
| 2 | F | F | M | F | F | F | M | M | M | M | F | F | M | M | M | M | F | F | $B_2$ | $B_2$ | F |
| 3 | F | F | M | F | F | F | $B_2$ | F | F | M | F | F | F | M | F | F | F | F | F | $B_2$ | F |
| 4 | F | F | M | F | F | F | $B_2$ | F | F | M | M | M | M | M | M | M | F | $B_1$ | $B_2$ | $B_2$ | F |
| 5 | F | $B_2$ | M | M | M | F | F | F | F | M | F | F | M | F | F | M | F | F | F | F | F |

Fig.16

Fig.17

Fig.18

Fig.19